(19) Europäisches Patentamt / European Patent Office / Office européen des brevets

(11) **EP 4 263 724 B1**

(12) **EUROPEAN PATENT SPECIFICATION**

(45) Date of publication and mention
of the grant of the patent:
**15.04.2026 Bulletin 2026/16**

(21) Application number: **21824575.1**

(22) Date of filing: **08.12.2021**

(51) International Patent Classification (IPC):
*C09C 1/56* (2006.01)    *C09C 1/50* (2006.01)
*C09C 1/54* (2006.01)    *C09C 1/48* (2006.01)

(52) Cooperative Patent Classification (CPC):
**C09C 1/48; C09C 1/50; C09C 1/54; C09C 1/56;**
C01P 2006/80; Y02P 20/54

(86) International application number:
**PCT/EP2021/084746**

(87) International publication number:
**WO 2022/128674 (23.06.2022 Gazette 2022/25)**

(54) **PROCESS FOR PRODUCING CARBON BLACKS WITH REDUCED POLYCYCLIC AROMATIC HYDROCARBON CONTENT UTILIZING SUPERCRITICAL FLUID EXTRACTION**

VERFAHREN ZUR HERSTELLUNG VON RUSSEN MIT VERRINGERTEM GEHALT AN POLYCYCLISCHEM AROMATISCHEM KOHLENWASSERSTOFF UNTER VERWENDUNG VON SUPERKRITISCHER FLUIDEXTRAKTION

PROCÉDÉ DE PRODUCTION DE NOIRS DE CARBONE À FAIBLE TENEUR EN HYDROCARBURES AROMATIQUES POLYCYCLIQUES UTILISANT L'EXTRACTION DE FLUIDE SUPERCRITIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2020 EP 20215362**

(43) Date of publication of application:
**25.10.2023 Bulletin 2023/43**

(73) Proprietor: **Orion Engineered Carbons IP GmbH & Co. KG**
**40789 Monheim (DE)**

(72) Inventors:
• **WAIDMANN, Guido**
  **50374 Erftstadt (DE)**
• **KRAUSS, Kai**
  **63796 Kahl am Main (DE)**
• **DETERS, David**
  **53173 Bonn (DE)**
• **SCHINKEL, Arndt-Peter**
  **56112 Lahnstein (DE)**
• **ETZOLD, Bastian**
  **64380 Roßdorf (DE)**
• **DROCHNER, Alfons**
  **65527 Niedernhausen (DE)**
• **GLÄSEL, Jan**
  **64287 Darmstadt (DE)**
• **WIDJAJA, Andreas**
  **61130 Niderau (DE)**

(74) Representative: **f & e patent**
**Braunsberger Feld 29**
**51429 Bergisch Gladbach (DE)**

(56) References cited:
**WO-A1-2019/084200    US-A1- 2008 159 947**

• **HAWTHORNE STEVEN B. ET AL: "Comparing PAH Availability from Manufactured Gas Plant Soils and Sediments with Chemical and Biological Tests. 1. PAH Release during Water Desorption and Supercritical Carbon Dioxide Extraction", ENVIRONMENTAL SCIENCE & TECHNOLOGY, vol. 36, no. 22, 1 November 2002 (2002-11-01), US, pages 4795 - 4803, XP055807650, ISSN: 0013-936X, DOI: 10.1021/ es020626k**

(Cont. next page)

- JONKER MICHIEL T. O. ET AL: "Extremely Slowly Desorbing Polycyclic Aromatic Hydrocarbons from Soot and Soot-like Materials: Evidence by Supercritical Fluid Extraction", ENVIRONMENTAL SCIENCE & TECHNOLOGY, vol. 39, no. 20, 1 October 2005 (2005-10-01), US, pages 7889 - 7895, XP055807565, ISSN: 0013-936X, DOI: 10.1021/es0505191

**Description**

TECHNICAL FIELD

The present invention relates to a process for purifying carbon blacks, and more specifically makes use of supercritical fluid extraction (SFE), particularly with an extraction agent comprising carbon dioxide in a supercritical state, for producing carbon blacks that have a reduced content of polycyclic aromatic hydrocarbon impurities. The disclosure further relates to purified carbon blacks obtainable by this process, and applications and uses of such purified carbon blacks.

TECHNICAL BACKGROUND

Carbon blacks are widely employed in industry as an additive for various different applications, for example as a coloring agent or pigment, reinforcing filler or conductive agent in the manufacture of paints, coatings, inks, electrodes or plastic or rubber articles. Depending on the respective application, carbon blacks with different properties are required, which can be controlled by the carbon black production process and possible aftertreatment. Carbon blacks are produced by controlled thermal or thermal-oxidative decomposition of hydrocarbon precursors such as oils, natural gas or acetylene. Established carbon black production processes include the furnace black process, the gas black process, the lamp black process, the acetylene process or the thermal black process.

Depending on the carbon black production process, used hydrocarbon precursor materials and process conditions, impurities such as metals, sulfur and organic compounds can contaminate the obtained carbon blacks. Such impurities, particularly when present in relatively high amounts, may adversely affect the carbon black performance and therefore be undesirable in certain applications.

Carbon blacks can in particular contain as impurities organic compounds that have a skeleton with a polycyclic aromatic structure, which are commonly referred to as polycyclic aromatic hydrocarbons (PAHs). PAHs are believed to be harmful to the health and environment as for example discussed in Sudip K. Samanta, Om V. Singh and Rakesh K. Jain: "Polycyclic aromatic hydrocarbons: environmental pollution and bioremediation", TRENDS in Biotechnology, Vol. 20, No. 6, Jun. 2002, pages 243-248. Therefore, the PAH content of carbon blacks is subject to increasingly demanding customer needs and official regulations for applications such as use in food or beverage contact situations, pharmaceuticals, cosmetics, or the manufacture of toys and articles for children. For instance, the American Food and Drug Administration (FDA) has limited the total PAH content of high purity furnace blacks in goods with food contact to 0.5 ppm (cf. U.S. Code of Federal Regulations (CFR) 21 Sec.178.3297), whereby the PAH content is defined as the sum of 22 PAH compounds.

Among the PAH compounds contaminating carbon blacks may moreover be polycyclic aromatic hydrocarbons that have one or more nitro functionalities, referred to also as nitro-PAHs. Nitro-PAHs are for example frequently found in oxidized carbon blacks as they may form during an oxidative treatment of carbon blacks. Nitro-PAH compounds are likewise believed to be hazardous to health especially due to their ascribed mutagenicity (cf. e.g. Peter P. Fu and Diogenes Herreno-Saenz: "Nitro-polycyclic aromatic hydrocarbons: A class of genotoxic environmental pollutants", Journal of Environmental Science and Health, Part C: Environmental Carcinogenesis and Ecotoxicology Reviews, Vol. 17, No. 6, 1999, pages 1-43). Therefore, there is also a desire for reducing the amount of nitro-PAHs in carbon blacks.

The PAH content of carbon blacks can to some extent be controlled by the conditions in the carbon black production process. For instance, high temperatures and/or late quenching in a furnace reactor typically reduce the PAH content in the obtained carbon blacks as described for example in US patent No. 4,138,471 and WO 2019/084200 A1. However, adjustment of the process conditions in the carbon black production process also affects other properties of the produced carbon blacks, such as their structure, particle size distribution and surface area, which makes such approach rather inflexible and limits the range of obtainable carbon blacks.

Other approaches for reducing the PAH content of carbon blacks rely on an aftertreatment of carbon blacks and are thus generally independent of the respective production process. For instance, WO 2008/058114 A2 discloses a treatment of carbon blacks by Soxhlet extraction using organic solvents such as toluene for producing carbon blacks having a low PAH content. Other purification techniques are based on treating the carbon black material with steam. These conventional approaches, however, are relatively costly, limited in their efficiency and require additional process means for the removal of residual organic solvent or moisture from the purified carbon black. Moreover, the use of organic solvents is unfavorable due to environmental and safety considerations.

Hence, there is a continuous strive for means of effectively purifying carbon blacks and obtaining carbon blacks with a low PAH content, if possible without adversely affecting other properties of the carbon black or the use of purifying agents which are expensive, harmful or are difficult to remove from the carbon black product.

WO 2019/084200 A1 relates to carbon particles having a total content of PAHs of less than or equal to about 0.5 ppm and a content of benzo[a]pyrene of less than or equal to about 5 ppb. US 2008/0159947 A1 relates to carbon blacks having a low PAH content and methods of making the same. None of these two references D1 and D2 relates to a purification of carbon blacks by supercritical fluid extraction.

S. B. Hawthorne et al., "Comparing PAH availability from manufactured gas plant soils and sediments with chemical and biological tests. 1. PAH release during water desorption and supercritical carbon dioxide extraction", Environ. Sci. Technol. 2002, 36, 4795-4803 relates to a scientific study of PAH release characteristics from chemical residues found in manufactured gas plant (MGP) sites investigated by supercritical extraction at 200 bar and 50°C. M. T. O. Jonker et al., "Extremely slowly desorbing polycyclic aromatic hydrocarbons from soot and soot-like materials: Evidence by supercritical fluid extraction", Environ. Sci. Technol. 2005, 39, 7889-7895. concerns a similar scientific study, investigating PAH release from soot and soot-like materials using supercritical fluid extraction at 200 bar and 50°C.

Accordingly, it is an objective of the present invention to provide a process for effectively removing PAHs, if possible including nitro-PAHs, from carbon blacks and to provide carbon blacks having a reduced content of such impurities, which overcomes or alleviates at least some of the above-mentioned deficiencies and limitations of the prior art. The process should for example enable efficient purification ideally without adversely affecting other properties of the carbon black and/or making use of harmful or costly substances. The purification process should further if possible be applicable to all kinds of carbon blacks obtained by different production processes and be economic and environmental-friendly.

SUMMARY OF INVENTION

This objective and additional advantages as described herein have unexpectedly been achieved by providing a process as defined in appended independent claim 1.

The present invention accordingly relates to a process for producing a purified carbon black with a reduced content of polycyclic aromatic hydrocarbons. The process comprises:

(a) providing a carbon black comprising an initial content of polycyclic aromatic hydrocarbons,
(b) treating the carbon black comprising an initial content of polycyclic aromatic hydrocarbons with an extraction agent comprising carbon dioxide in a supercritical state to extract at least a portion of the polycyclic aromatic hydrocarbons from the carbon black, and
(c) removing the extraction agent comprising the extracted polycyclic aromatic hydrocarbons from the carbon black to obtain a purified carbon black with a lower content of polycyclic aromatic hydrocarbons than the initial content of polycyclic aromatic hydrocarbons.

The present disclosure is also drawn to a purified carbon black obtained by the process according to the present invention as disclosed above and described in more detail below.

The present disclosure furthermore relates to the use of such purified carbon black as pigment, reinforcing filler or conductive agent, for example for the manufacture of plastic or rubber articles, paints, inks, coatings, electrodes or energy storage devices.

Moreover, the present invention is directed towards the use of supercritical carbon dioxide for a purification of carbon black, particularly for removing polycyclic aromatic hydrocarbons from carbon black, as defined in appended independent claim 14.

The process of the present invention involving a treatment of carbon black with an extraction agent comprising carbon dioxide in a supercritical state provides several advantages. Thus, it is flexible and applicable to various kinds of carbon blacks, independent of their production process. The process of the invention enables effectively purifying carbon blacks and obtaining carbon blacks with a low PAH content, substantially without adversely affecting other properties of the carbon black or the use of purifying agents which are expensive, harmful or difficult to remove from the carbon black product. Use of an extraction agent in the supercritical state beneficially combines densities similar to those of a liquid with solute diffusivities and viscosities closer to those of a gas, which enables high mass transfer rates and rapid and efficient extraction of PAHs from carbon blacks. Moreover, the solvent strength can be varied herein by a simple variation of the applied pressure and/or temperature or the addition of suitable modifiers. Furthermore, carbon dioxide has the benefit of being non-toxic, nonflammable and inexpensive. It has a critical temperature as low as 304.2 K (31°C) in combination with a critical pressure of 72.8 atm (7,380 kPa). The extraction with an extraction agent comprising carbon dioxide can thus be carried out at relatively mild conditions thereby reducing the tendency of undesirable changes to the carbon black by the purification treatment. Furthermore, supercritical carbon dioxide can easily be separated from the carbon black for example via pressure release, which leads to vaporization of the carbon dioxide. Thus, no dedicated step of drying or solvent removal after the extraction is required.

These and other optional features and advantages of the present invention will be described in more detail in the following description.

BRIEF DESCRIPTION OF DRAWINGS

Figure 1 shows $\Sigma \varepsilon \cdot n \cdot l$ calculated from the measured absorption at a wavelength of 250 nm of an absorbing medium of acetonitrile through which the PAH laden extraction agent for supercritical fluid extraction according to Example 4 is passed as a function of the extraction time.

Figure 2a shows the relative extracted amount for the total group of PAH22 compounds as a function of the extraction time for a pressure of 200 bar and 300 bar in the supercritical fluid extractions of Examples 4b and 4c.

Figures 2b and 2c show the relative extracted amount of naphthalene and pyrene, respectively, as a function of the extraction time for a pressure of 200 bar and 300 bar in the supercritical fluid extractions of Examples 4b and 4c.

Figure 3 shows the relative extracted amount of PAH22 compounds as a function of the temperature applied in the supercritical fluid extractions of Examples 5-7.

DETAILED DESCRIPTION

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g. 1 to 6.3, or 5.5 to 10, or 2.7 to 6.1.

All parts, amounts, concentrations etc. referred to herein are by weight, unless specified otherwise.

As mentioned above, the present invention relates to a process for producing a purified carbon black with a reduced content of polycyclic aromatic hydrocarbons. The process comprises (a) providing a carbon black comprising an initial content of polycyclic aromatic hydrocarbons, (b) treating the carbon black comprising an initial content of polycyclic aromatic hydrocarbons with an extraction agent comprising carbon dioxide in a supercritical state to extract at least a portion of the polycyclic aromatic hydrocarbons from the carbon black, and (c) removing the extraction agent comprising the extracted polycyclic aromatic hydrocarbons from the carbon black to obtain a purified carbon black with a lower content of polycyclic aromatic hydrocarbons than the initial content of polycyclic aromatic hydrocarbons.

The term "polycyclic aromatic hydrocarbons (PAHs)" as used herein refers to organic compounds having a skeleton with two or more, such as two to seven, fused aromatic rings, i.e. a polycyclic aromatic structure. Hydrocarbon groups such as alkyl groups can optionally be bound to the skeleton of fused aromatic rings. As used herein, "polycyclic aromatic hydrocarbons (PAHs)" may encompass non-substituted compounds having such a polycyclic aromatic structure, that is respective compounds consisting of carbon and hydrogen atoms only, as well as substituted derivatives thereof, wherein one or more hydrogen atom is substituted by a functional group, which includes one or more than one heteroatom(s), i.e. atoms other than carbon and hydrogen such as O, N and/or S. One particular class of substituted PAH compounds includes for example PAH compounds that have one or more than one nitro functional group(s) $(-NO_2)$, which are referred herein as nitro-PAHs. Thus, in a broad sense the content of polycyclic aromatic hydrocarbons (PAHs) may refer to the total content of PAHs including nitro-PAHs.

For the purpose of the present invention, the content of polycyclic aromatic hydrocarbons of a carbon black can more specifically refer to the content of one or more than one specific group(s) of PAH compounds, such as the PAH22 and/or nitro-PAH8 group, as defined infra. Accordingly, a content of polycyclic aromatic hydrocarbons of a carbon black indicated herein can in particular mean a content of the compounds of the PAH22 group (also referred to as PAH22 content) or of the nitro-PAH8 group (also referred to as nitro-PAH8 content) or the sum of the PAH22 content and the nitro-PAH8 content.

"PAH22" as used herein refers to the group of 22 PAH compounds as specified by the American Food and Drug Administration (FDA) in the U.S. Code of Federal Regulations (CFR) 21 Sec.178.3297 and the method entitled "Determination of PAH content of Carbon Black", dated July 8, 1994, as developed by Cabot Corp., mentioned therein: naphthalene (CAS no. 91-20-3), acenaphthylene (CAS no. 208-96-8), acenaphthene (CAS no. 83-32-9), fluorene (CAS no. 86-73-7), phenanthrene (CAS no. 85-01-8), anthracene (CAS no. 120-12-7), fluoranthene (CAS no. 206-44-0), pyrene (CAS no. 129-00-0), benzo(g,h,i)fluoranthene (CAS no. 203-12-3), benz(a)anthracene (CAS no. 56-55-3), cyclopenta(c,d)pyrene (CAS no. 27208-37-3), chrysene (CAS no. 218-01-9), benzo(b)fluoranthene (CAS no. 205-99-2), benzo(k)fluoranthene (CAS no. 207-08-9), benzo(e)pyrene (CAS no. 192-97-2), benzo(a)pyrene (CAS no. 50-32-8), perylene (CAS no. 198-55-0), dibenzo(a,h)anthracene (CAS no. 53-70-3), benzo(g,h,i)perylene (CAS no. 191-24-2), indeno(1,2,3-cd)pyrene (CAS no. 193-39-5), anthanthrene (CAS no. 191-26-4), and coronene (CAS no. 191-07-1). The PAH22 content is thus determined as the total amount of these 22 compounds based on the total weight of a carbon black sample. The PAH22 content can be determined by analyzing a toluene extract obtained by Soxhlet extraction of the carbon black sample using GC-MS utilizing deuterated forms of PAH22 compounds for calibration following the above-mentioned method entitled "Determination of PAH content of Carbon Black", dated July 8, 1994 as described in the examples.

"Nitro-PAH8" as used herein refers to the group of the following eight nitro-functional PAH compounds: 1-nitronaphthalene (CAS no. 86-57-7), 2-nitronaphthalene (CAS no. 581-89-5), 9-nitrophenanthrene (CAS no. 954-46-1), 3-nitrofluoranthene (CAS no. 892-21-7), 1-nitropyrene (CAS no. 5522-43-0), 1,3-dinitropyrene (CAS no. 75321-20-9), 1,6-dinitropyrene (CAS no. 42397-64-8) and 4-nitrobiphenyl (CAS no. 92-93-3). Accordingly, the nitro-PAH8 content is determined as the sum of the amounts of these eight compounds based on the total weight of a carbon black sample. The nitro-PAH8 content of a carbon black sample can be determined analogously to the determination of the PAH22 content by analyzing a toluene extract obtained by Soxhlet extraction of the carbon black sample by GC-MS utilizing deuterated forms of nitro-PAH8 compounds for calibration as set forth in the examples.

According to the present invention a carbon black comprising an initial content of polycyclic aromatic hydrocarbons is provided as starting material to be purified. For the sake of clarity, as will be apparent to the skilled reader, "carbon black" is different from "soot" or "black carbon". Soot or black carbon are used to designate generally unwanted carbonaceous by-products resulting from an incomplete combustion of carbon-containing materials, such as oil, fuel, diesel or gasoline, coal, paper or waste material. Soot and black carbon contain large quantities of organic and inorganic impurities typically containing less than 60% of elemental carbon, based on the total mass, and are composed of rather coarse particles having hardly a well-defined structure or order. On the contrary, carbon black is deliberately produced by incomplete combustion or thermal decomposition of gaseous or liquid hydrocarbons under controlled conditions, and typically has a higher carbon content such as 80 wt. % or more, based on the total mass, and is composed of particles, which have a well-defined structure and high degree of order including graphene-like arrangement of carbon atoms, and high surface area-to-volume ratio.

This initial carbon black provided as starting material to be purified in the process of the present invention can be any possible carbon black and be provided by any process for the production of carbon black. Different industrial processes for the production of carbon blacks are available and include e.g. the furnace process, gas black process, acetylene black process, thermal black process or lamp black process, as for example described in J.-B. Donnet et al., "Carbon Black: Science and Technology", 2nd edition. The carbon black comprising an initial content of polycyclic aromatic hydrocarbons used in the practice of the present invention can accordingly for example comprise or be a furnace black, a thermal black, a lamp black, a channel black, a gas black, an acetylene black, a recycled black or a combination of any of the foregoing. Recycled blacks are carbon blacks obtained from end-of-use carbon black-containing products, such as waste tires, and obtainable by recycling processes, typically involving two steps, a pyrolysis step for the decomposition of organic components such as rubbers or plastics and a demineralization step for dissolving inorganic additives or impurities. A wide variety of carbon blacks with different properties that can be used in the present invention are commercially available from carbon black manufacturer such as for example Cabot Corporation, Mitsubishi Chemical Company, Tokai Carbon, Denka, Birla Carbon or Orion Engineered Carbons GmbH. Non-limiting examples thereof include carbon blacks marketed under the ECORAX®, PUREX®, CORAX®, PRINTEX®, AROSPERSE®, HIBLACK®, COLOUR BLACK, SPECIAL BLACK, or NEROX® brands by ORION Engineered Carbons GmbH.

The carbon black used as starting material in the process of the present invention furthermore may have been subjected to an optional aftertreatment or not. For example, the carbon black comprising an initial content of polycyclic aromatic hydrocarbons used in the practice of the present invention can comprise a carbon black which either has been subjected to an oxidative treatment or has not been subjected to an oxidative treatment. Carbon blacks that have been subjected to an oxidative treatment, also referred to as "oxidized carbon blacks", comprise oxygen-containing functional groups in particular at the surface of the carbon black particles. The oxygen-containing functional groups can be exemplified, but are not limited to, alcohol, quinone, carboxyl, phenol, lactol, lactone, anhydride, chinone, peroxidic, ether, and ketone groups. Oxidative treatment can for example be accomplished by treatment with oxidizing agents including oxygen gas, ozone, peroxides such as hydrogen peroxide, persulfates such as sodium and potassium persulfates, hypohalites such as sodium hypochlorite, nitric acid, and transition metal-containing oxidants such as permanganate salts, osmium tetroxide, chromium oxides, ceric ammonium nitrates; and mixtures thereof. Oxidized carbon blacks typically have a notable oxygen content. For example, oxidized carbon blacks that can be used according to the present invention can have an oxygen content of 0.5 wt.% or more, such as 1 wt. % or more, or 2 wt. % or more, or 5 wt. % or more, or 10 wt.% or more, based on the total weight of the oxidized carbon black. Typically, the oxygen content does not exceed 20 wt. %, based on the total weight of the oxidized carbon black material. For example, the oxidized carbon black can contain from 0.5 wt.% to 20 wt.%, or from 1 wt.% to 15 wt. %, or from 2 wt. % to 10 wt. %, or from 5 wt. % to 15 wt. % of oxygen, based on the total weight of the oxidized carbon black material. An oxidized carbon black used as starting material according to the present invention may have an oxygen content in a range between any of the above-mentioned values. Non-limiting examples of oxidized carbon blacks that can be used in the practice of the present invention are for instance SPECIAL BLACK 4, SPECIAL BLACK 5, SPECIAL BLACK 6, SPECIAL BLACK 250, COLOUR BLACK FW 200, COLOUR BLACK FW 2, COLOUR BLACK FW 255, or COLOUR BLACK FW310, all commercially available from Orion Engineered Carbons GmbH.

The carbon black provided for purification according to the process of the present invention has an initial content of polycyclic aromatic hydrocarbons. The initial content of polycyclic aromatic hydrocarbons can vary significantly, depending on the type of carbon black employed and its production method. For example, the initial content of polycyclic aromatic hydrocarbons can vary from as low as a few ppm to 10,000 ppm or even more. For instance, the carbon black to be purified in the process of the present invention may have an initial content of polycyclic aromatic hydrocarbons of 10 ppm or more, or 20 ppm or more, or 50 ppm or more, such as 100 ppm or more, 250 ppm or more, 500 ppm or more, 800 ppm or more, or 1,000 ppm or more. The carbon black can have an initial content of polycyclic aromatic hydrocarbons of 10,000 ppm or less, such as 5,000 ppm or less, or 3,000 ppm or less, or 2,000 ppm or less, or 1,000 ppm or less, or 800 ppm or less, or 500 ppm or less, or 400 ppm or less, or 300 ppm or less, or 200 ppm or less, or 100 ppm or less. The carbon black to be purified in the process of the present invention may have an initial content of polycyclic aromatic hydrocarbons in a range between any of the recited values, such as in a range from 10 ppm to 10,000 ppm, or a range from 50 ppm to 5,000 ppm, or a range from 200 ppm to 800 ppm.

For example, the carbon black to be purified in the process of the present invention may have an initial PAH22 content of 10 ppm or more, such as 20 ppm or more, or 30 ppm or more, or 50 ppm or more, or 80 ppm or more, or 100 ppm or more, or 250 ppm or more, or 500 ppm or more, or 800 ppm or more, or 1,000 ppm or more. The carbon black can have an initial PAH22 content of 10,000 ppm or less, such as 5,000 ppm or less, or 3,000 ppm or less, or 2,000 ppm or less, or 1,000 ppm or less, or 800 ppm or less, or 500 ppm or less, or 400 ppm or less, or 300 ppm or less, or 200 ppm or less, or 100 ppm or less, or 50 ppm or less. The carbon black to be purified in the process of the present invention may have an initial PAH22 content in a range between any of the recited values, such as in a range from 10 ppm to 10,000 ppm, or from 500 ppm to 3,000 ppm or a range from 10 ppm to 200 ppm.

The carbon black to be purified in the process of the present invention may moreover for example have an initial nitro-PAH8 content of 1 ppm or more, or 2 ppm or more, or 3 ppm or more, or 4 ppm or more, or 5 ppm or more, or 10 ppm or more, such as 20 ppm or more, or 30 ppm or more, or 40 ppm or more, or 50 ppm or more, or 80 ppm or more, or 100 ppm or more, or 150 ppm or more, or 200 ppm or more, or 250 ppm or more, or 300 ppm or more, or 400 ppm or more, or 500 ppm or more. The carbon black can have an initial nitro-PAH8 content of 1,000 ppm or less, such as 800 ppm or less, or 500 ppm or less, or 300 ppm or less, or 200 ppm or less, or 100 ppm or less, or 50 ppm or less, or 40 ppm or less, or 30 ppm or less, or 20 ppm or less, or 10 ppm or less, or 5 ppm or less, or 3 ppm or less, or 2 ppm or less, or 1 ppm or less. The carbon black to be purified in the process of the present invention may have an initial nitro-PAH8 content in a range between any of the recited values, such as in a range from 1 ppm to 1,000 ppm, or from 5 ppm to 200 ppm or a range from 10 ppm to 100 ppm.

The carbon black can have any combination of the initial PAH22 and nitro-PAH8 contents specified above.

For example, the carbon black comprising an initial content of polycyclic aromatic hydrocarbons can comprise a relatively high PAH22 content, such as 500 ppm or more, or 1,000 ppm or more and concomitantly a relatively low nitro-PAH8 content such as 50 ppm or less, or 20 ppm or less, or 10 ppm or less, or 5 ppm or less. Such carbon black can for instance be exemplified by a gas black not oxidatively aftertreated.

In another example, the carbon black comprising an initial content of polycyclic aromatic hydrocarbons may have a relatively low PAH22 content such as 100 ppm or less, or 50 ppm or less, or 20 ppm or less and concomitantly a relatively high nitro-PAH8 content such as 50 ppm or more, or 100 ppm or more. Such carbon black can for instance be an oxidized carbon black as an oxidation treatment may facilitate a formation of nitro-PAHs.

In another example, the carbon black comprising an initial content of polycyclic aromatic hydrocarbons may have a relatively low PAH22 content such as 100 ppm or less, or 50 ppm or less, or 30 ppm or less and concomitantly a relatively low nitro-PAH8 content such as 50 ppm or less, or 20 ppm or less, or 10 ppm or less, or 5 ppm or less. Such carbon black can for instance be a furnace black.

The carbon black comprising an initial content of polycyclic aromatic hydrocarbons provided in step (a) of the process can furthermore be characterized by one or more than one or all of the following properties.

Thus, the carbon black comprising an initial content of polycyclic aromatic hydrocarbons provided in step (a) of the process be characterized by its ash content. The carbon black can for example have an ash content of 20 wt.% or less, such as 15 wt. % or less, or 10 wt. % or less, or 5 wt. % or less, or 3 wt. % or less, or 1 wt. % or less, or 0.5 wt. % or less, or 0.1 wt. % or less, based on the total weight of the carbon black. The carbon black can for example have an ash content of 0.001 wt. % or more, such as 0.005 wt. % or more, or 0.01 wt. % or more, or 0.05 wt. % or more, or 0.1 wt. % or more, or 0.2 wt. % or more, or 0.3 wt. % or more, or 0.5 wt. % or more, or 1 wt. % or more, or 2 wt. % or more, or 3 wt. % or more, based on the total weight of the carbon black. The carbon black to be purified in the process of the present invention may have an ash content in a range between any of the recited values, such as in a range from 0.001 wt. % to 20 wt. %, or from 0.005 wt. % to 5 wt.%, or from 0.1 to 1 wt.%. The ash content of the carbon black can be determined according to ASTM D1506-15.

Further, the carbon black comprising an initial content of polycyclic aromatic hydrocarbons can be characterized by a content of volatiles. The content of volatiles can be determined by heating to 950°C according to DIN 53552:1977. The carbon black can for example have a volatile content of 20 wt. % or less, such as 15 wt. % or less, or 10 wt. % or less, or 5 wt. % or less, or 3 wt. % or less, or 1 wt. % or less, based on the total weight of the carbon black. The carbon black can for example have a volatile content of 0.1 wt. % or more, such as 0.2 wt.% or more, or 0.3 wt.% or more, or 0.5 wt.% or more, or 1 wt.% or more, or 2 wt.% or more, or 3 wt.% or more, based on the total weight of the carbon black. The carbon black to be purified in the process of the present invention may have a volatile content in a range between any of the recited values, such as in a range from 0.1 wt.% to 20 wt. %, or from 0.2 wt. % to 15 wt. %, or from 1 to 10 wt. %.

Moreover, the carbon black comprising an initial content of polycyclic aromatic hydrocarbons can be characterized by its moisture content. For example, the carbon black can have a moisture content of 15 wt.% or less, such as 10 wt. % or less, or 5 wt. % or less, or 3 wt. % or less, or 1 wt. % or less, based on the total weight of the carbon black. The carbon black can for example have a moisture content of 0.1 wt.% or more, such as 0.2 wt.% or more, or 0.3 wt.% or more, or 0.5 wt.% or more, or 1 wt.% or more, based on the total weight of the carbon black. The carbon black to be purified in the process of the present invention may have a moisture content in a range between any of the recited values, such as in a range from 0.1 wt.% to 15 wt. %, or from 0.2 wt. % to 10 wt. %, or from 0.3 to 3 wt. %. The moisture content of the carbon black can be determined according to ASTM D1509-18.

The carbon black comprising an initial content of polycyclic aromatic hydrocarbons can further be characterized by its carbon content. For example, the carbon black can have a carbon content of 80 wt.% or more, such as 85 wt.% or more, or 90 wt.% or more, or 95 wt.% or more, or 97 wt.% or more, or 98 wt.% or more, based on the total weight of the carbon black. The carbon black can for example have a carbon content of up to 99.9 wt. %, such as 99.5 wt. % or less, or 99 wt. % or less, or 98 wt. % or less, or 97 wt.% or less, or 95 wt.% or less. The carbon black to be purified in the process of the present invention may have a carbon content in a range between any of the recited values, such as in a range from 80 wt.% to 99.9 wt. %, or from 80 wt. % to 97 wt. %, or from 85 to 95 wt. %. The carbon content can be determined by elemental analysis.

The carbon black comprising an initial content of polycyclic aromatic hydrocarbons can further be characterized by a specific surface area. For example, the carbon black can have a BET surface area of 10 $m^2/g$ or more, such as 20 $m^2/g$ or more, or 30 $m^2/g$ or more, or 50 $m^2/g$ or more, or 80 $m^2/g$ or more, or 100 $m^2/g$ or more, or 150 $m^2/g$ or more, or 200 $m^2/g$ or more, or 300 $m^2/g$ or more, or 500 $m^2/g$ or more, or 1,000 $m^2/g$ or more. The carbon black can for example have a BET surface area of 2,000 $m^2/g$ or less, such as 1,500 $m^2/g$ or less, or 1,000 $m^2/g$ or less, or 800 $m^2/g$ or less, or 500 $m^2/g$ or less, or 300 $m^2/g$ or less, or 200 $m^2/g$ or less. The carbon black to be purified in the process of the present invention may have a BET surface area in a range between any of the recited values, such as in a range from 10 to 2,000 $m^2/g$, or from 30 to 500 $m^2/g$, or from 50 to 300 $m^2/g$. The BET surface area can be measured by nitrogen adsorption according to ASTM D6556-19a.

In the process according to the present invention a single carbon black or a mixture of two or more different carbon blacks, which may each be as described above, can be used as carbon black material to be purified.

As set forth above, in the process according to the present invention, the provided carbon black with the initial reduced content of polycyclic aromatic hydrocarbons is treated with an extraction agent to extract at least a portion of the polycyclic aromatic hydrocarbons from the carbon black. Herein, the extraction agent comprises carbon dioxide in a supercritical state. "Supercritical state" means that the extraction agent is in the state of a supercritical fluid. A supercritical fluid is obtained at a temperature and pressure above the critical temperature and pressure (critical point), i.e. in the supercritical region of the respective phase diagram. The critical point represents the highest temperature and pressure at which the respective substance can exist as a gas and liquid in equilibrium. A supercritical fluid exhibits intermediate properties between that of a gas and of a liquid. Use of an extraction agent in the supercritical state can for example advantageously combine liquid-like densities with gas-like diffusivities and viscosities, which promotes high mass transfer rates and rapid and efficient extraction of PAHs from the carbon black. Specifically, carbon dioxide has a relatively low critical temperature of 304.2 K (31°C) and a relatively low critical pressure of about 74 bar (7,380 kPa). The extraction with an extraction agent comprising carbon dioxide can thus be carried out at relatively mild conditions thereby reducing the tendency of undesirable changes to the carbon black by the purification treatment. Furthermore, supercritical carbon dioxide can easily be separated from the carbon black for example via pressure release, which leads to vaporization of the carbon dioxide. Thus, no dedicated step of drying or solvent removal after the extraction is required. Additionally, carbon dioxide has the benefit of being non-toxic, nonflammable and inexpensive.

The extraction agent used according to the present invention can comprise for example at least 50 wt.% carbon dioxide, such as at least 70 wt.% carbon dioxide, such as at least 80 wt.% carbon dioxide, or at least 90 wt. % carbon dioxide, or at least 95 wt.% carbon dioxide, or at least 99 wt.% carbon dioxide, or at least 99.5 wt.% carbon dioxide, based on the total weight of the extraction agent. In a preferred variant, the extraction agent can consist of supercritical carbon dioxide, i.e. be substantially free of any other constituent than carbon dioxide. "Substantially free" means that substances other than carbon dioxide are included in the extraction agent, if present at all, only as impurities in small amounts of generally not more than 0.2 wt.%, such as 0.1 wt.% or less, or 0.005 wt.% or less, based on the total weight of the extraction agent. Alternatively, the extraction agent can comprise one or more auxiliary agents in addition to carbon dioxide. Such auxiliary agents may for example be used in order to control or change the chemical and/or physical properties of the extraction agent such as the viscosity, polarity or solvent strength of the extraction agent. Useful auxiliary agents include for example, without being limited thereto, air, oxygen, nitrogen, methane, water, and organic solvents like methanol, toluene, and dichloromethane or a combination of any of the foregoing. The auxiliary agent(s) can be used in any amount in the extraction agent according to the respective needs. For example, the one or more auxiliary agents can be used in a total amount of 50 wt. % or less, such as 30 wt. % or less, 20 wt. % or less or 10 wt. % or less, or 5 wt. % or less, or 1 wt. % or less, or 0.5 wt. % or less, based on the total weight of the extraction agent. The amount of auxiliary agent within the extraction agent can also be varied over time during the treatment of the carbon black in step (b). Preferably, however, the extraction agent used in the practice of the present does not include any auxiliary agents.

According to the process disclosed herein, the carbon black comprising an initial content of polycyclic aromatic hydrocarbons is treated with the extraction agent comprising carbon dioxide in a supercritical state to extract at least a portion of the polycyclic aromatic hydrocarbons from the carbon black. The treatment with the extraction agent is accordingly carried out at conditions under which the extraction agent is in a supercritical state. The carbon black is therefore treated with the extraction agent at a temperature and a pressure above the critical temperature and above the critical pressure of the extraction agent, respectively. The critical temperature and critical pressure can be derived from a phase diagram of the respective extraction agent, corresponding to the temperature and pressure at the critical point. A treatment of the carbon black with carbon dioxide as extraction agent can for example be carried out at a pressure at or above the critical pressure of carbon dioxide (73.8 bar). According to the present invention, treating the carbon black with the extraction agent is conducted at a temperature of 75°C or more, such as 100°C or more, or 150°C or more, or 200°C or more, or 250°C or more. The treatment can for example be conducted at a temperature of 500°C or less, such as 400°C or less, or 350°C or less, or 300°C or less. Treating the carbon black with the extraction agent can be carried out at a temperature in a range between any of the recited values, such as at a temperature in a range from 75°C to 400°C, preferably from 100°C to 350°C, such as from 100°C to 300°C. Moreover, treating the carbon black with the extraction agent can for example be conducted at a pressure of 73.8 bar or more, such as 75 bar or more, or 100 bar or more, or 120 bar or more, or 150 bar or more, or 200 bar or more. The treatment can for example be carried out at a pressure or 700 bar or less, such as 500 bar or less, or 400 bar or less, or 300 bar or less, or 250 bar or less. Treating the carbon black with the extraction agent can be carried out at a pressure in a range between any of the recited values, such as at a pressure in a range from 75 bar to 700 bar, preferably from 100 bar to 500 bar, such as from 150 bar to 300 bar. For example, treating the carbon black with the extraction agent in the process according to the invention can be carried out at a temperature in a range from 75 to 300°C, preferably from 120 to 280°C, more preferably from 150 to 250°C, and a pressure in a range from 150 to 350 bar, preferably from 180 to 320 bar, more preferably from 200 to 300 bar.

Treating of the carbon black with the extraction agent in the process of the present invention can comprise exposing the carbon black to a flow of the extraction agent. The average flow rate can vary widely, e.g. depending on the size of the reactor used and/or the amount of carbon black that is treated therein with the extraction agent. The average flow rate of the extraction agent can for example be 5 NL/h or more, such as 10 NL/h or more, or 20 NL/h or more, or 50 NL/h or more, or 100 NL/h or more, or 150 NL/h or more, or 200 NL/h or more, or 250 NL/h or more, or 500 NL/h or more, or 1,000 NL/h or more, or 5,000 NL/h or more, or 10,000 NL/h or more, or 50,000 NL/h or more, or 100,000 NL/h or more, or 500,000 NL/h or more, or 1,000,000 NL/h or more, or 5,000,000 NL/h or more. For example, the average flow rate of the extraction agent can be 20,000,000 NL/h or less, such as 10,000,000 NL/h or less, or 5,000,000 NL/h or less, or 1,000,000 NL/h or less, or 500,000 NL/h or less, or 100,000 NL/h or less, 50,000 NL/h or less, or 10,000 NL/h or less, or 5,000 NL/h or less, or 1,000 NL/h or less, or 500 NL/h or less, such as 400 NL/h or less, or 300 NL/h or less, or 250 NL/h or less, or 200 NL/h or less or 150 NL/h or less, or 100 NL/h or less. The average flow rate can be in a range between any of the recited values, such as in a range from 5 NL/h to 10,000,000 NL/h, or from 50 NL/h to 500,000 NL/h, or from 100 NL/h to 10,000 NL/h or from 150 NL/h to 300 NL/h, or from 200 NL/h to 250 NL/h. Typically in a reactor with a comparatively small volume of the extraction chamber as employed in the examples described infra, the average flow rate is in a range from 50 NL/h to 250 NL/h. The average flow rate of the extraction agent is calculated based on the total volume which the supplied amount of the extraction agent would have under standard conditions (101.325 kPa, 0°C) and the overall extraction time. The volume of extraction agent can be measured for example by a mass flow meter, for instance positioned downstream of the extraction chamber, which measures the amount of extraction agent in the gaseous state per unit time at a certain temperature and pressure, e.g. at room temperature and atmospheric pressure. Integration over time yields then the total volume of extraction agent. The measured total volume of extraction agent can then be converted to a total volume of extraction agent under standard conditions by using the ideal gas law. The total volume of extraction agent under standard conditions expressed in norm liters [NL] is divided by the overall extraction time to calculate the average flow rate under standard conditions.

The average flow rate of the extraction agent (in NL/h) per unit volume of the extraction chamber of the reactor (in L) can for example be 50 $NL \cdot h^{-1} \cdot L^{-1}$ or more, such as 100 $NL \cdot h^{-1} \cdot L^{-1}$ or more, or 200 $NL \cdot h^{-1} \cdot L^{-1}$ or more, or 500 $NL \cdot h^{-1} \cdot L^{-1}$ or more, or 1,000 $NL \cdot h^{-1} \cdot L^{-1}$ or more, or 2,000 $NL \cdot h^{-1} \cdot L^{-1}$ or more, or 2,500 $NL \cdot h^{-1} \cdot L^{-1}$ or more, or 3,000 $NL \cdot h^{-1} \cdot L^{-1}$ or more. For example, the average flow rate of the extraction agent per unit volume of the extraction chamber of the reactor (in L) can be 6,000 $NL \cdot h^{-1} \cdot L^{-1}$ or less, such as 5,000 $NL \cdot h^{-1} \cdot L^{-1}$ or less, or 4,000 $NL \cdot h^{-1} \cdot L^{-1}$ or less, or 3,000 $NL \cdot h^{-1} \cdot L^{-1}$ or less, or 2,500 $NL \cdot h^{-1} \cdot L^{-1}$ or less or 2,000 $NL \cdot h^{-1} \cdot L^{-1}$ or less, or 1,000 $NL \cdot h^{-1} \cdot L^{-1}$ or less. The average flow rate of the extraction agent per unit volume of the extraction chamber can be in a range between any of the recited values, such as in a range from 50 $NL \cdot h^{-1} \cdot L^{-1}$ to 6,000 $NL \cdot h^{-1} \cdot L^{-1}$, or from 500 $NL \cdot h^{-1} \cdot L^{-1}$ to 5,000 $NL \cdot h^{-1} \cdot L^{-1}$, or from 1,000 $NL \cdot h^{-1} \cdot L^{-1}$ to 4,000 $NL \cdot h^{-1} \cdot L^{-1}$, or from 2,000 $NL \cdot h^{-1} \cdot L^{-1}$ to 3,000 $NL \cdot h^{-1} \cdot L^{-1}$. Typically, the average flow rate per unit volume of the extraction chamber of the reactor (in L) is in a range from 500 $NL \cdot h^{-1} \cdot L^{-1}$ to 3,000 $NL \cdot h^{-1} \cdot L^{-1}$.

The average flow rate of the extraction agent (in NL/h) per mass unit of the amount of treated carbon black (in kg) can for example be 100 $NL \cdot h^{-1} \cdot kg^{-1}$ or more, such as 500 $NL \cdot h^{-1} \cdot kg^{-1}$ or more, or 1,000 $NL \cdot h^{-1} \cdot kg^{-1}$ or more, or 5,000 $NL \cdot h^{-1} \cdot kg^{-1}$ or more, or 10,000 $NL \cdot h^{-1} \cdot kg^{-1}$ or more, or 20,000 $NL \cdot h^{-1} \cdot kg^{-1}$ or more, or 50,000 $NL \cdot h^{-1} \cdot kg^{-1}$ or more. For example, the average flow rate of the extraction agent per mass unit of the amount of treated carbon black (in kg) can be 100,000 $NL \cdot h^{-1} \cdot kg^{-1}$ or less, such as 80,000 $NL \cdot h^{-1} \cdot kg^{-1}$ or less, 50,000 $NL \cdot h^{-1} \cdot kg^{-1}$ or less, or 20,000 $NL \cdot h^{-1} \cdot kg^{-1}$ or less, or 10,000 $NL \cdot h^{-1} \cdot kg^{-1}$ or less, or 5,000 $NL \cdot h^{-1} \cdot kg^{-1}$ or less or 2,000 $NL \cdot h^{-1} \cdot kg^{-1}$ or less, or 1,000 $NL \cdot h^{-1} \cdot kg^{-1}$ or less. The average flow rate of the extraction agent per mass unit of the amount of treated carbon black (in kg) can be in a range between any of the recited values, such as in a range from 100 $NL \cdot h^{-1} \cdot kg^{-1}$ to 100,000 $NL \cdot h^{-1} \cdot kg^{-1}$, or from 1,000 $NL \cdot h^{-1} \cdot kg^{-1}$ to 50,000 $NL \cdot h^{-1} \cdot kg^{-1}$, or from 5,000 $NL \cdot h^{-1} \cdot kg^{-1}$ to 20,000 $NL \cdot h^{-1} \cdot kg^{-1}$. Typically, the average flow rate per mass unit of the amount of treated carbon black (in kg) is in a range from 5,000 $NL \cdot h^{-1} \cdot kg^{-1}$ to 100,000 $NL \cdot h^{-1}$, such as from 5,000 $NL \cdot h^{-1} \cdot kg^{-1}$ to 20,000 $NL \cdot h^{-1} \cdot kg^{-1}$.

The carbon black can be treated with the extraction agent in the process according to the present invention for any desirable time. The treatment time will generally be determined by applied extraction conditions and the desired degree of purification on the one hand and economic considerations on the other hand. For example, the carbon black can be treated with the extraction agent in the process according to the present invention for a time of at least one second, such as at least 10 seconds, or at least 30 seconds, or at least 1 minute, or at least 2 minutes, or at least 5 minutes, or at least 10 minutes, or at least 20 minutes, or at least 30 minutes, or at least 40 minutes, or at least 50 minutes, or at least 1 hour, or at least 2 hours, or at least 4 hours, or at least 6 hours, or at least 10 hours, or at least 15 hours. The treatment of the carbon black with the extraction agent in the process according to the present invention can for example be conducted for a time of up to 48 hours, such as 24 hours or less, or 20 hours or less, or 16 hours or less, or 10 hours or less, or 6 hours or less, or 4 hours or less, or 2 hours or less, or 1 hour or less, or 50 minutes or less, or 40 minutes or less, or 30 minutes or less, or 20 minutes or less, or 10 minutes or less, or 5 min or less, or 2 minutes or less or 1 minute or less, or 30 seconds or less, or 10 seconds or less. The time period can for example be in the range of 10 minutes to 45 minutes. The carbon black can be treated with the extraction agent for a time in a range between any of the recited values, for example from 1 minute to 48 hours, or from 5 minutes to 24 hours, or from 10 minutes to 4 hours, or from 20 minutes to 1 hour.

The conditions such as pressure, temperature and flow rate of the treatment of the carbon black with the extraction agent in the process according to the invention can be held substantially constant during the treatment or be varied in a controlled manner over time. This can be advantageous since on the one hand the solvent properties of the supercritical extraction agent such as solute diffusivities, viscosity and mass transfer rate and on the other hand the solubilities and vapor pressures of the polycyclic aromatic hydrocarbons each depend on the pressure and/or the temperature. Thus, changing the temperature, the pressure and/or the flow rate of the extraction agent in the treatment step over time can contribute to optimize the extraction efficiency. Temperature and/or pressure during the treatment step can for example be changed in a stepwise manner, i.e. the carbon black can be treated with the extraction agent for a predetermined first time at a first temperature and a first pressure, subsequently for a predetermined second time at a second temperature and a second pressure and so on. This is however only one example, and the extraction conditions can be changed during the treatment step in any possible manner, e.g. according to a customized predetermined program. A change of the conditions during the treatment step can for example be accomplished by changing the conditions within an extraction chamber and/or by transferring the carbon black between different zones of the extraction chamber and/or between different extraction chambers.

The conditions of the treatment step in the process according to the invention can be chosen such that treating the carbon black with the extraction agent comprises extracting at least 30 wt.%, such as at least 40 wt.%, or at least 50 wt. %, or at least 70 wt. %, or at least 80 wt. %, or at least 90 wt. %, or at least 95 wt. % or at least 99 wt. %, or at least 99.5 wt. %, or at least 99.8 wt. %, or at least 99.9 wt.%, or at least 99.95 wt.% of the polycyclic aromatic hydrocarbons from the carbon black, based on the initial content of polycyclic aromatic hydrocarbons. More specifically, treating the carbon black with the extraction agent can comprise extracting at least 30 wt.%, such as at least 40 wt. %, or at least 50 wt. %, or at least 70 wt. %, or at least 80 wt. %, or at least 90 wt. %, or at least 95 wt. % or at least 99 wt. %, or at least 99.5 wt. %, or at least 99.8 wt.%, or at least 99.9 wt.%, or at least 99.95 wt.% of the initial PAH22 content from the carbon black. Alternatively or in addition, treating the carbon black with the extraction agent can comprise extracting at least 30 wt. %, such as at least 40 wt. %, or at least 50 wt. %, or at least 70 wt. %, or at least 80 wt. %, or at least 90 wt. %, or at least 95 wt. % or at least 99 wt. %, or at least 99.5 wt. %, or at least 99.8 wt. %, or at least 99.9 wt. %, or at least 99.95 wt.% of the initial nitro-PAH8 content from the carbon black.

It is noted that the PAHs and nitro-PAHs may be present on the surface of and within the carbon black particles, whereby the distribution depends on the conditions of the production process and possible aftertreatment steps. PAH molecules residing on the surface of a particle may typically be more easily removed during the supercritical fluid extraction than molecules being incorporated within a carbon black particle. Therefore, for instance PAHs residing predominantly on the surface of the particle, such as for example nitro-PAHs formed during oxidative treatment, may be removed more completely compared to PAHs being more evenly distributed between the particle surface and the particle volume.

The process of the present invention further comprises removing the extraction agent comprising the extracted polycyclic aromatic hydrocarbons from the carbon black to obtain a purified carbon black with a lower content of polycyclic aromatic hydrocarbons than the initial content of polycyclic aromatic hydrocarbons. For example, the carbon black can be treated as set forth above with a flow of extraction agent such that the extraction agent comprising the extracted polycyclic aromatic hydrocarbons is continuously removed from the treated carbon black, which is accordingly increasingly purified with progressing treatment time. A precipitation of the extracted polycyclic aromatic hydrocarbons within the extraction chamber or periphery such as pressure lines connected thereto is generally to be avoided as this may lead to re-contamination of the carbon black and/or plugging of the pressure lines. Precipitation of the extracted polycyclic aromatic hydrocarbons in the extraction chamber and the pressure lines connected thereto can for example be prevented by heating them to a temperature high enough to keep the polycyclic aromatic hydrocarbons dissolved in the extraction agent.

The process disclosed herein may optionally further comprise a step of separating at least a portion of the polycyclic aromatic hydrocarbons from the extraction agent comprising the extracted polycyclic aromatic hydrocarbons removed from the carbon black. This can for example be accomplished by phase separation or reducing the solubility of the polycyclic aromatic hydrocarbons in the extraction agent. For example, the temperature and/or pressure of the extraction agent comprising the extracted polycyclic aromatic hydrocarbons can be adjusted such that the extraction agent transforms into a gaseous state and the extracted polycyclic aromatic hydrocarbons can be separated from the gaseous extraction agent e.g. as a liquid and/or solid phase. Alternatively, the temperature and/or pressure of the extraction agent comprising the extracted polycyclic aromatic hydrocarbons can be adjusted such that the extracted polycyclic aromatic hydrocarbons condense and/or precipitate but the extraction agent remains in the supercritical state. The polycyclic aromatic hydrocarbons could also be separated from the extraction agent by passing the extraction agent comprising the extracted polycyclic aromatic hydrocarbons through a suitable filter such as a PAH adsorbing or absorbing medium. For instance, the extraction agent comprising the extracted polycyclic aromatic hydrocarbons can be passed through a liquid absorber medium, which can for example comprise one or more organic solvent, to absorb at least a portion of the polycyclic aromatic hydrocarbons by the liquid phase and yield an extraction agent depleted of PAHs. A suitable absorber medium is for example acetonitrile. The extraction agent comprising the extracted polycyclic aromatic hydrocarbons can be contacted with the absorber medium with the extraction agent in the supercritical state or after being transformed to a non-supercritical state, for example gaseous state. In the latter case, temperature and pressure conditions can be chosen such that only part or essentially none of the polycyclic aromatic hydrocarbons condense or precipitate prior to passing through the absorbing medium. Separating at least a portion of the polycyclic aromatic hydrocarbons from the extraction agent can also comprise transforming the extraction agent into a gaseous state and separating part of the extracted polycyclic aromatic hydrocarbons from the gaseous extraction agent as a liquid and/or solid phase by means of condensation and/or precipitation and further separating at least part of the remaining polycyclic aromatic hydrocarbons from the extracting agent by passing through an absorber medium.

The process of the present invention may further comprise after the separation of at least a portion of the extracted polycyclic aromatic hydrocarbons from the extraction agent, recycling the thus obtained extraction agent for use in the step of treating the carbon black comprising an initial content of polycyclic aromatic hydrocarbons described above. Preferably, the recycled extraction agent is substantially free or completely free of polycyclic aromatic hydrocarbons. "Substantially free" means in this respect that the recycled extraction agent contains less than 0.5 wt.%, such as less than 0.1 wt.% of polycyclic aromatic hydrocarbons. "Completely free" means the recycled extraction agent contains no polycyclic aromatic hydrocarbons, except for traces that may be present as omnipresent impurities.

Optionally the process disclosed herein can further comprise detecting the amount of polycyclic aromatic hydrocarbons extracted by the treatment of the carbon black with the extraction agent. To this end, for instance the extraction agent comprising the extracted aromatic hydrocarbons that has been removed from the carbon black as set forth above, e.g. a continuous effluent flow from an extraction chamber, can be analyzed for its content of extracted polycyclic aromatic hydrocarbons. The analysis can be conducted continuously or discontinuously, e.g. as an online measurement, i.e. while the extraction treatment is ongoing, and make use of any analysis technique that provides a measurement allowing to draw quantitative or qualitative inferences regarding the contemporary or accumulated amount of PAHs extracted from the carbon black. For example, in case the extracted polycyclic aromatic hydrocarbons are at least partially separated from the extraction agent by passing through a liquid absorber medium as mentioned above, the absorbance or absorbance change of the absorber medium at one or more characteristic wavelengths within the electromagnetic spectrum, e.g. in the UV or visible range of the electromagnetic spectrum, can be measured over time. From such measurement, a measure for the contemporary extracted amount and/or the overall amount of extracted polycyclic aromatic hydrocarbons can be deduced. Such information related to a detection of the amount of polycyclic aromatic hydrocarbons extracted by the treatment of the carbon black with the extraction agent can furthermore be used to control the treatment of the carbon black with the extraction agent. Thus, it can for instance be used to control the extraction time such as for example to terminate the treatment of the carbon black with the extraction agent when a certain amount of polycyclic aromatic hydrocarbons extracted over time is indicated by the analysis. Furthermore, the detected information could be used in a feedback mechanism to control the extraction conditions such as pressure and/or temperature in the treatment of the carbon black with the extraction agent. For example, the carbon black comprising an initial content of polycyclic aromatic hydrocarbons can at first be exposed to the extraction agent at a first temperature and a first pressure. Subsequently, for example when the contemporary extracted amount of PAHs or the extraction rate, as indicated by the detected information, drops below a threshold value, pressure and/or temperature can be adjusted to treat the carbon black with the extraction agent at a second temperature and a second pressure. In this way, the extraction parameters could be tailored to optimize for an extraction of the different PAH species from an increasingly purified carbon black. This may for example allow to define different conditions for extracting PAHs from a carbon black at an initial extraction stage or a carbon black at a later extraction stage already purified to some extent from PAHs, and/or to extract PAHs being located at or near the surface of the carbon black particles or PAHs being located within the carbon black particles as these may have different extraction characteristics. This can enhance extraction efficiencies while concomitantly minimizing the influence on other properties of the carbon black such as for example on surface oxygen-containing groups.

Optionally the process according to the present invention can further comprise drying the carbon black comprising an initial content of polycyclic aromatic hydrocarbons prior to treating it with the extraction agent. The drying step can be conducted such that moisture is removed from the provided carbon black sample to an extent such that residual moisture, if any, does not exceed a predetermined level considered to be tolerable, such as for example 0.5 wt.% or 0.1 wt. %, if possible without substantially altering the surface chemistry of the carbon black particles. Drying is typically carried out at elevated temperatures such as at a temperature of 50°C or more, or 100°C or more, or 150°C or more, for example heating the carbon black sample to a temperature in a range from 100°C to 200°C, such as from 120°C to 180°C, for a time period of 1 minute or more such as 10 minutes or more, or 30 minutes or more, or 60 minutes or more, or 90 minutes or more. Heating can be achieved by any conventional means. The drying can be carried out in a gas atmosphere, e.g. a flow of a gaseous medium, which can be preheated to elevated temperatures. The gaseous medium can for example be air or nitrogen. The gaseous medium can however in particular comprise one or more components used in the extraction agent utilized later during the supercritical fluid extraction, however, in a gaseous state. As such, the gaseous medium can for example comprise or consist of carbon dioxide. In one implementation, the drying step is carried out at a temperature of about 150°C in gaseous carbon dioxide at a pressure of about 10 bar for about 1.5 hours. For instance, the provided carbon black can have an initial moisture content as described above, which can be reduced by the drying of the carbon black, for example removing thereby 80% or more, such as 90% or more, or 95% or more of the initial moisture content from the carbon black. During the drying step, the carbon black can reside in a reactor subsequently utilized for supercritical fluid extraction as described infra, such as for example within an extraction chamber of such reactor, or the drying may be carried out outside of such reactor or in a separate unit.

The process according to the present invention can be carried out in a pressure-resistant reactor. Reactors for supercritical fluid extraction are commercially offered for example by Uhde High Pressure Technologies GmbH, Hagen, Germany and THAR Process Inc., PA, USA. The reactor is generally constructed to withstand the temperatures and pressures required for supercritical fluid extraction. The reactor can be made of suitable metallic construction materials such as e.g. stainless steel. The reactor generally comprises heating means for controlling the temperature in the treatment step with the extraction agent. The heating means can be any conventional heating means. The reactor may comprise an extraction volume, such as an extraction chamber, in which the carbon black is provided for treatment with the extraction agent. The extraction chamber can for example have a volume of 0.01 L or more, such as 0.05 L or more, or 0.1 L or more, or 0.5 L or more, or 1 L or more, or 5 L or more, or 10 L or more, or 50 L or more, or 100 L or more, or 200 L or more, or 500 L or more, or 1,000 L or more. The extraction chamber can for example have a volume of 10,000 L or less, such as 5,000 L or less, or 2,000 L or less, or 1,000 L or less, or 500 L or less, or 200 L or less, or 100 L or less, or 50 L or less, or 20 L or less, or 10 L or less, or 5 L or less, or 2 L or less, or 1 L or less, or 0.5 L or less, or 0.2 L or less, or 0.1 L or less. The volume of the extraction chamber can be in a range between any of the recited values such as in a range from 0.01 L to 5,000 L, or from 0.05 L to 0.5 L, or from 1 L to 2,000 L, or from 10 L to 1,000 L. A reactor can comprise a single extraction chamber or two or more extraction chambers. For instance, a reactor with two or more extraction chambers can be used, which may allow for a quasi-continuous operation also in batch mode wherein one or more of the extraction chambers are charged with the initial carbon black to be treated or treated carbon black is discharged therefrom while carbon black is extracted in one or more other extraction chamber(s) of the reactor. Thus, providing a carbon black comprising an initial content of polycyclic aromatic hydrocarbons can comprise introducing an amount of said carbon black into the extraction chamber(s) of the reactor. Typically, the extraction chamber(s) is fed with extraction agent through an inlet connected to a feeding line from one or more sources of the extraction agent. The extraction agent comprising polycyclic aromatic hydrocarbons can be withdrawn from the extraction chamber(s) through an outlet and connected effluent line. The reactor typically further comprises conventional means for flow and process control such as sensors, pressure or flow regulation means, valves, pumps and controllers. Typically, the one or more than one extraction chamber is designed such that a flow of the extraction agent may be forced through the carbon black material rather than flowing for example above the carbon black material. In this way, the contact time of the extraction agent with the carbon particles may be increased thus enhancing extraction efficacy.

For example, carbon dioxide may be supplied as extraction agent in a pressurized container. The carbon dioxide can be withdrawn from the container e.g. to establish a continuous flow with at a predetermined flow rate, e.g. regulated by one or more pumps and/or flow control means connected to the feeding line. Pressure and temperature of the extraction agent can be regulated by pressure regulating and heating means to provide the extraction agent in a supercritical state. Pressure regulation can for example be accomplished by control of the pump(s), valves and back-pressure regulators in the system, whereas heating can for example be accomplished by heating the feeding line e.g. by providing the same with electrical heating jackets, heating tapes or alike, and/or by one or more heating elements that heat the extraction chamber, which can e.g. be of a resistive electrical heater type. The obtained flow of supercritical carbon dioxide extraction agent contacts the carbon black in the extraction chamber to extract PAHs therefrom. Optionally, auxiliary agents such as those mentioned above can be supplied to the flow of carbon dioxide at a predetermined constant or variable ratio at any stage of the reactor such as upstream of the extraction chamber.

The process can further comprise retrieving and/or collecting the purified carbon black. This can involve stopping a feed of the extraction agent, withdrawing the extraction agent or the purified carbon black from the extraction chamber, or otherwise separating the purified carbon black and the extraction agent. Generally, the process according to the present invention can be conducted as a continuous process, as a semi-batch or as a batch process. In case of a continuous process, carbon black comprising an initial content of polycyclic aromatic hydrocarbons can for example be continuously fed to an extraction chamber where it is treated with the extraction agent, e.g. using a continuous flow of the extraction agent, and the purified carbon black be continuously withdrawn from the extraction chamber. Preferably, such continuous process can be carried out in a manner with no substantial mixing of the carbon black particles fed at different times into the extraction chamber such that the residence time in the extraction chamber and thus the extraction time is approximately the same. Moreover, a flow of extraction agent from the inlet to the outlet may be in an opposite direction, the same direction, a perpendicular direction or any other angular configuration to the conveying direction of the carbon black particles.

In case of a batch or semi-batch process, a batch of carbon black comprising an initial content of polycyclic aromatic hydrocarbons can to be loaded to an extraction chamber and treated with the extraction agent for a desired time under controlled conditions to extract PAHs and produce the purified carbon black having a reduced content of PAHs. After the desired time, the treatment can be stopped and the purified carbon black be retrieved, for example by releasing the pressure and removing the purified carbon black from the extraction chamber. Prior to removing the purified carbon black from the extraction chamber, the extraction agent can optionally be removed from the extraction chamber and replaced with a gaseous medium such as for example nitrogen or air, and then reducing the temperature or pressure, e.g. to ambient conditions. In this way, condensation or precipitation of extracted polycyclic aromatic hydrocarbons comprised in the extraction agent can be avoided. Separation of any residual extraction agent from the purified carbon black can be effectuated by reducing the pressure and/or the temperature below the respective critical value(s) for the extraction agent, thereby transforming the extraction agent to the gaseous state. Since carbon dioxide is a gas at ambient conditions, separation from the purified carbon black can be accomplished according to the present invention in a straightforward manner without the need of any further drying or purification steps, which may be required for example when organic solvents or steam is employed for extraction.

The process of the present invention can generally be carried out independently of carbon black production or treatment processes. It can accordingly be applied to a wide variety of different carbon black grades. The process can nevertheless advantageously be implemented in a carbon black production plant and be carried out e.g. after a carbon black production or treatment process. For example, the process disclosed herein can be implemented downstream of a carbon black production, such as for example downstream of a furnace reactor, and upstream or downstream of other carbon black aftertreatment processes such as for example an oxidative treatment.

The purified carbon black obtainable by the process according to the present invention has a lower content of polycyclic aromatic hydrocarbons than the initial content of polycyclic aromatic hydrocarbons of the carbon black provided for purification. The purified carbon black can for example have a content of polycyclic aromatic hydrocarbons, which corresponds to 70 wt.% or less, such as 60 wt. % or less, or 50 wt. % or less, or 30 wt. % or less, or 20 wt. % or less, or 10 wt. % or less, or 5 wt. % or less, or 1 wt. % or less, or 0.5 wt. % or less, or 0.2 wt. % or less, or 0.1 wt. % or less, or 0.05 wt. % or less of the initial content of polycyclic aromatic hydrocarbons. For instance, the purified carbon black can have a PAH22 content, which corresponds to 70 wt. % or less, such as 60 wt. % or less, or 50 wt. % or less, or 30 wt. % or less, or 20 wt. % or less, or 10 wt. % or less, or 5 wt. % or less, or 1 wt. % or less, or 0.5 wt. % or less, or 0.2 wt. % or less, or 0.1 wt. % or less, or 0.05 wt. % or less of the initial PAH22 content. Alternatively or in addition, the purified carbon black can have a nitro-PAH8 content, which corresponds to 70 wt.% or less, such as 60 wt. % or less, or 50 wt. % or less, or 30 wt. % or less, or 20 wt. % or less, or 10 wt. % or less, or 5 wt. % or less, or 1 wt. % or less, or 0.5 wt. % or less, or 0.2 wt. % or less, or 0.1 wt. % or less, or 0.05 wt. % or less of the initial nitro-PAH8 content.

The purified carbon black obtainable by the process according to the present invention may for example have a PAH22 content of less than 1,500 ppm, such as less than 1,000 ppm, or less than 700 ppm, or less than 500 ppm, or less than 200 ppm, or less than 150 ppm, or less than 100 ppm, or less than 50 ppm, or less than 20 ppm, or less than 10 ppm, or less than 5 ppm, or less than 3 ppm, or less than 2 ppm, or less than 1 ppm, or less than 0.5 ppm.

The purified carbon black obtainable by the process according to the present invention may moreover for example have a nitro-PAH8 content of less than 200 ppm, such as less than 100 ppm, or less than 50 ppm, or less than 25 ppm, or less than 10 ppm, or less than 5 ppm, or less than 3 ppm, or less than 1 ppm, or less than 0.5 ppm, or less than 0.3 ppm, or less than 0.2 ppm, or less than 0.1 ppm.

The purified carbon black can have any combination of the PAH22 and nitro-PAH8 contents specified above. The purified carbon blacks obtainable according to the process according to the present invention can have a PAH content such as PAH22 and /or nitro-PAH8 content that ensures compliance with official regulations for applications of the purified carbon blacks in areas such as use in food or beverage contact situations, pharmaceuticals, cosmetics, or the manufacture of toys and articles for children, e.g. compliance with FDA regulations.

The purified carbon black can further have any of the other characteristics and properties described above for the carbon black provided as starting material to be purified, such as carbon content, oxygen content, volatile content, ash content, moisture content, and BET surface area. These properties may remain substantially unaffected by the purification process disclosed herein. Thus, the purified carbon black may apart from the content of PAHs substantially correspond to the carbon black provided as starting material to be purified. For instance, the carbon content, oxygen content, volatile content, ash content, moisture content, and/or BET surface area of the purified carbon black can correspond to the respective value of the carbon black provided as starting material, as described above, ±30%, or ±20%, or ±10%, or ±5%.

The purified carbon blacks obtained according to the present invention can be used in any application, where carbon blacks are conventionally employed or useful. The purified carbon blacks according to the present invention can for example be employed as pigment, reinforcing filler or conductive agent, such as for the manufacture of plastic or rubber articles, paints, inks, coatings, electrodes or energy storage devices. The purified carbon blacks according to the present invention are particularly useful in applications, where there is an increased awareness or concern regarding PAHs or where PAH-related official regulations exist, such as in food or beverage contact situations, pharmaceuticals, cosmetics, or the manufacture of toys and articles for children.

In view of the foregoing disclosed herein are inter alia, without being limited thereto, the following aspects of the invention:

1. A process for producing a purified carbon black with a reduced content of polycyclic aromatic hydrocarbons, the process comprising:

(a) providing a carbon black comprising an initial content of polycyclic aromatic hydrocarbons,
(b) treating the carbon black comprising an initial content of polycyclic aromatic hydrocarbons with an extraction agent comprising carbon dioxide in a supercritical state to extract at least a portion of the polycyclic aromatic hydrocarbons from the carbon black, wherein treating the carbon black with the extraction agent is conducted at a temperature of 75°C or more, and
(c) removing the extraction agent comprising the extracted polycyclic aromatic hydrocarbons from the carbon black to obtain a purified carbon black with a lower content of polycyclic aromatic hydrocarbons than the initial content of polycyclic aromatic hydrocarbons.

2. The process according to preceding Aspect 1, wherein the carbon black comprising an initial content of polycyclic aromatic hydrocarbons comprises a furnace black, a thermal black, a lamp black, a gas black, an acetylene black, a recycled black or a combination of any of the foregoing.

3. The process according to any one of preceding Aspects 1 or 2, wherein the carbon black comprising an initial content of polycyclic aromatic hydrocarbons comprises an oxidized carbon black.

4. The process according to any one of preceding Aspects 1 to 3, wherein the carbon black comprising an initial content of polycyclic aromatic hydrocarbons exhibits one or more or all of:

- an ash content determined according to ASTM D1506-15 of 20 wt.% or less, such as 15 wt. % or less, 10 wt. % or less, 5 wt. % or less, 3 wt. % or less, 1 wt. % or less, or 0.5 wt. % or less, or 0.1 wt. % or less,
- a volatile content determined by heating to 950°C according to DIN 53552:1977 of 20 wt. % or less, such as 15 wt. % or less, such as 10 wt. % or less,
- a moisture content determined according to ASTM D1509-18 of 15 wt.% or less, such as 10 wt. % or less, 5 wt. % or less, 3 wt. % or less, or 1 wt. % or less, and/or
- a carbon content as determined by elemental analysis of 80 wt.% or more, such as 85 wt.% or more, such as 90 wt.% or more, such as 95 wt.% or more, such as 97 wt.% or more, such as 98 wt.% or more.

5. The process according to any one of preceding Aspects 1 to 4, wherein the content of polycyclic aromatic hydrocarbons is determined as the PAH22 content, the nitro-PAH8 content or the sum of the PAH22 content and the nitro-PAH8 content.

6. The process according to any one of preceding Aspects 1 to 5, wherein the carbon black comprising an initial content of polycyclic aromatic hydrocarbons has

- an initial PAH22 content of 10 ppm or more, such as 50 ppm or more, 100 ppm or more, 500 ppm or more, 800 ppm or more, or 1,000 ppm or more; and/or
- an initial nitro-PAH8 content of 1 ppm or more such as 10 ppm or more, 50 ppm or more, 100 ppm or more, or 500 ppm or more.

7. The process according to any one of preceding Aspects 1 to 6, wherein the extraction agent comprises at least 50 wt.% carbon dioxide, such as at least 70 wt. % carbon dioxide, such as at least 80 wt.% carbon dioxide, or at least 90 wt. % carbon dioxide, or at least 95 wt. % carbon dioxide, or at least 99 wt. % carbon dioxide, based on the total weight of the extraction agent.

8. The process according to any one of preceding Aspects 1 to 7, wherein the extraction agent further comprises one or more auxiliary agents.

9. The process according to any one of preceding Aspects 1 to 7, wherein the extraction agent consists of supercritical carbon dioxide.

10. The process according to any one of preceding Aspects 1 to 9, wherein treating the carbon black with the extraction agent in step (b) is conducted at a temperature in a range from 75°C to 400°C, preferably from 100°C to 300°C, and/or at a pressure of 75 bar or more, such as a pressure in a range from 75 bar to 700 bar, preferably from 150 bar to 300 bar.

11. The process according to any one of preceding Aspects 1 to 10, wherein treating the carbon black with the extraction agent in step (b) comprises exposing the carbon black to a flow of the extraction agent, wherein the average flow rate of the extraction agent per mass unit of the amount of treated carbon black (in kg) corresponds preferably to 1,000 $NL \cdot h^{-1} \cdot kg^{-1}$ or more, such as 5,000 $NL \cdot h^{-1} \cdot kg^{-1}$ or more, for example from 5,000 $NL \cdot h^{-1} \cdot kg^{-1}$ to 20,000 $NL \cdot h^{-1} \cdot kg^{-1}$.

12. The process according to any one of preceding Aspects 1 to 11, wherein treating the carbon black with the extraction agent in step (b) is conducted for a time of at least 1 minute, such as a time of at least 1 hour and/or of up to 48 hours.

13. The process according to any one of preceding Aspects 1 to 12, wherein treating the carbon black with the extraction agent in step (b) comprises

- extracting at least 40 wt. %, such as at least 70 wt. %, such as at least 80 wt.%, or at least 90 wt.% or at least 95 wt.% of the initial PAH22 content from the carbon black; and/or
- extracting at least 50 wt. %, such as at least 70 wt. %, such as at least 80 wt.%, or at least 90 wt.% or at least 95 wt.% of the initial nitro-PAH8 content from the carbon black.

14. The process according to any one of preceding Aspects 1 to 13, wherein the purified carbon black obtained in step (c) has a content of polycyclic aromatic hydrocarbons, which corresponds to

- 60 wt. % or less, such as 30 wt. % or less, such as 20 wt. % or less, such as 10 wt.% or less, such as 5 wt.% or less of the initial PAH22 content; and/or

- 50 wt. % or less, such as 30 wt. % or less, such as 20 wt. % or less, such as 10 wt.% or less, such as 5 wt.% or less of the initial nitro-PAH8 content.

15. The process according to any one of preceding Aspects 1 to 14, further comprising drying the carbon black comprising an initial content of polycyclic aromatic hydrocarbons prior to treating it with the extraction agent.

16. The process according to any one of preceding Aspects 1 to 15, further comprising separating at least a portion of the polycyclic aromatic hydrocarbons from the extraction agent comprising the extracted polycyclic aromatic hydrocarbons removed from the carbon black in step (c), such as by reducing the pressure, and optionally recycling the thus obtained extraction agent for use in step (b).

17. The process according to any one of preceding Aspects 1 to 16, further comprising detecting the amount of polycyclic aromatic hydrocarbons extracted by the extraction agent, such as by an online measurement, wherein preferably the treatment of the carbon black with the extraction agent in step (b) is controlled based on the detected amount of extracted polycyclic aromatic hydrocarbons.

18. The process according to any one of preceding Aspects 1 to 17, wherein the process is conducted as a continuous process, as a semi-batch or as a batch process.

19. The process according to any one of preceding Aspects 1 to 18 being carried out in a pressure-resistant reactor with heating means.

20. The process according to any one of preceding Aspects 1 to 19, wherein the purified carbon black has a PAH22 content of less than 1,500 ppm, such as less than 1,000 ppm, or less than 700 ppm, or less than 500 ppm, or less than 200 ppm, less than 150 ppm, or less than 100 ppm or less than 50 ppm, or less than 20 ppm, or less than 10 ppm.

21. The process according to any one of preceding Aspects 1 to 20, wherein the purified carbon black has a nitro-PAH8 content of less than 200 ppm, such as less than 100 ppm, or less than 50 ppm, or less than 25 ppm, or less than 10 ppm, or less than 5 ppm, or less than 1 ppm.

22. Use of supercritical carbon dioxide for a purification of carbon black, particularly for removing polycyclic aromatic hydrocarbons from carbon black, wherein the carbon black is purified with the supercritical carbon dioxide at a temperature of 75°C or more.

Having generally described the present invention above, a further understanding can be obtained by reference to the following specific examples. These examples are provided herein for purposes of illustration only, and are not intended to limit the present invention, which is rather to be given the full scope of the appended claims including any equivalents thereof.

EXAMPLES

All parts and percentages indicated throughout the Examples refer to weight, unless specified otherwise.

Employed materials:

Carbon blacks:

Carbon Black A: A gas black, commercially available from Orion Engineered Carbon GmbH, as an example of a carbon black having a relatively high initial PAH content.
Carbon Black B: An oxidized gas black, commercially available from Orion Engineered Carbon GmbH, as an example of an oxidized carbon black having a considerable initial nitro-PAH content.
Carbon Black C: A furnace black commercially available from Orion Engineered Carbon GmbH, as an example of a furnace black having a relatively low initial PAH content.

Carbon Black D: A furnace black commercially available from Orion Engineered Carbon GmbH, as an example of a furnace black having a relatively high initial PAH content.

Some characteristics of the investigated carbon blacks are summarized in Table 1 below:

Table 1

| | Carbon Black A | Carbon Black B | Carbon Black C | Carbon Black D |
|---|---|---|---|---|
| Carbon [wt. %] | ~ 93 | ~ 86 | ~97 | ~97 |
| Oxygen [wt. %] | ~ 5.4 | ~ 12.7 | ~1.0 | ~1.0 |
| Volatiles[1] [wt.%] | 4.5 | 14.5 | 0.6 | 0.7 |
| Ash content[2] [wt.%] | 0.01 | 0.02 | 0.30 | 0.1 |
| BET surface area[3] [m$^2$/g] | 92 | 180 | 48 | 35 |
| [1]determined by heating to 950°C according to DIN 53552:1977 [2]determined according to ASTM D1506-15 [3]determined according to ASTM D6556-19a | | | | |

Extraction agent: Carbon dioxide with a purity of 99.995 volume-%, supplied in pressurized liquid form in a 50 L dip tube bottle, commercially available from Westfalen AG.

Supercritical fluid extraction setup:

Supercritical fluid extraction of samples of the above-identified investigated carbon blacks was carried out in a custom-made high-temperature, highpressure supercritical fluid extraction setup using supercritical carbon dioxide as extraction agent. The setup comprises a tube-shaped extraction chamber (inner diameter: 1.43 cm, length: 50 cm, volume: 0.080 L) made of stainless steel (Swagelok IPT series 316/316L) with an inlet at one end and an outlet at its opposite end. The extraction chamber was mounted in an aluminum block equipped with four heating cartridges (Horst Heizpatronen 230 V, diameter 12.5 mm, length 160 mm, nominal power 500 W) for heating the extraction chamber. Two thermocouples (type K) were mounted within the aluminum block and used in combination with heating controllers (Eurotherm Universalregler 818 and 808) for measurement and regulation of the temperature of the aluminum block. The dip tube bottle containing carbon dioxide was connected via conventional ¼" tubes to the inlet of a pump (Knauer 80 P with an 100 mL pump head equipped with a cooling unit utilizing a Huber Ministat 125w cc1 cryostat) and from the outlet of the pump via a pressure line (Swagelok IPT series, outer diameter ¼") to the inlet of the extraction chamber for feeding the extraction agent to the extraction chamber. An exhaust pressure line (Swagelok IPT series, outer diameter ¼") connected to the outlet of the extraction chamber leads via a back-pressure regulator (customized Equilibar blockage resistant BPR equipped with a polyimide membrane and Kalrez® membranes)for reducing the pressure below the critical value into an absorption chamber located downstream of the extraction chamber to pass the (then gaseous) extraction agent laden with PAHs through a volume of acetonitrile provided as absorbing medium in the absorption chamber and releasing the purified extraction medium into the atmosphere by passing it through a mass flow meter (Bronkhorst F-201 CV) and a valve. Two filters (Swagelok IPT high pressure filters with each a 2 μm pore and a 0.5 μm pore filter element) were placed in the pressure lines upstream of and downstream of the extraction chamber, respectively, to avoid contamination of the pressure lines. The feed and exhaust pressure lines were moreover mantled with heating tapes (Horst Heizleitungen HS 450°C controlled by Eurotherm Universalregler) for heating of the extraction agent upstream and downstream of the extraction chamber to avoid precipitation and plugging of the lines. Flow rate and pressure of the continuous flow of extraction agent through the extraction chamber were controllable independently on the one hand by the pump connected to the feeding pressure line and on the other hand by the back-pressure regulator located downstream of the extraction chamber. The reference pressure applied to the dome of the BPR was delivered by a bypass line branching off from the feeding pressure line between the pump and the inlet of the extraction chamber.

Supercritical fluid extraction:

For supercritical fluid extraction, the extraction chamber was filled with about 10 g of the carbon black to be extracted. The carbon black was fixed between two glass wool plugs. In some cases, the carbon black was then subjected to an initial drying step as described in the following examples. The extraction chamber was then heated to the respective desired temperature and a continuous flow of the extraction agent through the extraction chamber provided, controlling the flow rate and pressure of the extraction agent by the pump and back-pressure regulator according to the respective desired values. Pressure and temperature were in each case chosen such that the carbon dioxide used as extraction agent was in a supercritical state. The carbon black sample was then subjected to supercritical fluid extraction under the set conditions for the respective desired time. Thereafter the flow of the extraction agent was stopped, the pressure released from the system and the sample allowed to cool to ambient temperature.

The thus obtained extracted carbon black samples were analyzed for their PAH22 and nitro-PAH8 content as described below.

Determination of PAH22 and nitro-PAH8 content:

The investigated carbon blacks were analyzed for their PAH22 content after supercritical fluid extraction and compared to the initial PAH22 content determined for a reference sample of the respective pristine commercially available carbon black that has not been subjected to supercritical fluid extraction. The PAH22 content was each determined following the method entitled "Determination of PAH content of Carbon Black", dated July 8, 1994, as developed by Cabot Corp., and incorporated by the American Food and Drug Administration (FDA) in the U.S. Code of Federal Regulations (CFR) 21 Sec.178.3297, as follows:

The carbon black material was crushed in a mortar with a pestle until a homogenous powder was obtained. A suitable amount (up to 10 g) of the powder was precisely weighed in a cellulose extraction thimble (MN 645, Macherey-Nagel, Düren, Germany). A glass wool plug and cellulose pieces from an extraction thimble were put on top of the carbon black and the filled thimble then loaded in the extraction chamber of a 100 mL Soxhlet apparatus with a 250 mL round bottom flask. Toluene was added to the flask and the condenser of the apparatus was gently flushed with nitrogen. The sample was then subjected to Soxhlet extraction with toluene in the Soxhlet apparatus for 48 h under light protection at a rate of approx. 10 cycles per hour. The obtained raw extract was then concentrated to slightly over 5 mL by means of a rotary evaporator operated at 40°C and a pressure reduction of 5 kPa as a minimum (Büchi Rotavapor R-200, Büchi Labortechnik AG, 9230 Flawil, Switzerland). The extract was then transferred to a 10 mL volumetric flask and brought to the mark by adding fresh toluene. To an aliquot of the extract were added 17 deuterated PAH standards (Ds-Naphthalene, $D_8$-Acenaphthylene, $D_{10}$-Acenaphthene, $D_{10}$-Fluorene, $D_{10}$-Phenanthrene, $D_{10}$-Anthracene, $D_{10}$-Fluoranthene, $D_{10}$-Pyrene, $D_{12}$-Benzo[a]anthracene, $D_{12}$-Chrysene, $D_{12}$-Benzo[b]fluoranthene, $D_{12}$-Benzo[k]fluoranthene, $D_{12}$-Benzo[a]pyrene, $D_{14}$-Dibenz[a,h]anthracene, $D_{12}$-Benzo[g,h,i]perylene, $D_{12}$-Indeno[1,2,3-c,d]pyrene and $D_{12}$-Coronene, each in an amount of 200 ng). Then, the extract aliquot was cleaned-up by treatment with a silica gel column (1 g silica gel/13% $H_2O$, 8 to 10 mm inner diameter and 5 $cm^3$ capacity). Subsequently, a further deuterated compound, $D_{12}$-Perylene, was added to the cleaned-up extract as recovery standard in an amount of 200 ng. The thus obtained solution was then used for HRGC/LRMS analysis (Capillary gas chromatography coupled with low resolution mass spectrometry) for PAH identification and quantification using the following instrumentation and conditions: Gas chromatograph: Thermo Scientific GC-Ultra with PTV injector, GC-column: 60 m DB5-MS, 0.25 mm ID, 0.25 $\mu$m film thickness; temperature program GC oven: preheating oven to 80°C, sample injection, holding for 2 min at 80°C, heating with a rate of 25°C/min to 180°C, heating with a rate of 8°C/min to 220°C, heating with a rate of 2°C/min to 250°C, heating with a rate of 3°C/min to 280°C, heating with a rate of 5°C/min to 320°C, hold at 320°C for 21min and 18 seconds; Mass spectrometer: Thermo Scientific Trace DSQ LRMS, operated in the electron impact mode (EI) and Selected Ion Monitoring (SIM Mode); mass resolution: 1 amu; monitoring of molecular and fragment ions for the individual PAH compounds. Calibration check of the instrument was performed for each analysis sequence by injection of mixtures containing all native PAHs of interest and the above-mentioned deuterated standards. Identification of the PAH species was achieved by analysis of the relative retention time, the molecular and fragment ions, and the fragmentation ratio. Quantification was performed using the instrumentation software via the deuterated internal PAHs using the isotope dilution and internal standard method. The PAH22 content was calculated by summing up the individual determined concentrations of the 22 PAH compounds, whereby for compounds, whose concentration were below the limit of quantification (LOQ), the LOQ was adopted as the respective concentration. The co-eluting isomer dibenz(a,h)anthracene and dibenz(a,c)anthracene could not be separated by the GC column and where thus taken as one substance, reported herein as "dibenz(a,h)anthracene".

The investigated carbon black B samples were also analyzed for their nitro-PAH8 content after supercritical fluid extraction and compared to the initial nitro-PAH8 content determined for a reference sample of the pristine carbon black B as commercially available that has not been subjected to supercritical fluid extraction. The determination of the nitro-PAH8 content was carried out in analogy to the determination of the PAH22 content as described above, based on the same analytical methods. In particular, the extraction of the carbon black, the volume reduction of the raw extract and the adjustment of a defined volume were performed exactly in the same manner as described above. The further steps were carried out as described above with the following nitro-PAH specific adaptations: To an aliquot of the extract were added as internal standards 2 deuterated nitro-PAHs ($D_9$-3-Nitrofluoranthene and $D_9$-1-Nitropyrene in an amount of 250 ng each) instead of the above-mentioned 17 deuterated PAH standards. The nitro-PAH extract aliquot containing the deuterated internal standards was directly subjected to High Resolution Mass Spectrometry (HRGC/HRMS) without further treatment. The following instrumentation and conditions were applied: Thermo Scientific GC-Ultra 2000 with PTV injector, GC-column: 30 m DB5-MS, 0.25 mm ID, 0.1 $\mu$m film thickness, temperature program GC oven: preheating oven to 80°C, sample injection, holding for 3 min and 42 seconds at 80°C, heating with a rate of 35°C/min to 180°C, heating with a rate of 6°C/min to 290°C, hold at 290°C for 37 seconds; mass spectrometer: Thermo Scientific MAT 95 HRMS, operated in the electron impact mode (EI) and Selected Ion Monitoring (SIM Mode); mass resolution: <8.000 amu, monitoring of molecular and fragment ions for the individual nitro-PAH compounds. Calibration check of the HRMS instrument was performed for each analysis sequence by injection of mixtures containing the 8 nitro-PAHs and the above-mentioned 2 deuterated standards. Identification of the nitro-PAH species was achieved by analysis of the relative retention time, the molecular and fragment ions, and the fragmentation ratio. Quantification was performed using the instrumentation software via the deuterated internal nitro-PAHs using the isotope dilution and internal standard method.

TPD-MS Characterization

The investigated carbon blacks were further analyzed by temperature-programmed desorption mass spectrometry (TPD-MS) and compared to a reference sample of the respective pristine commercially available carbon black that has not been subjected to supercritical fluid extraction as a measure for potential changes to the carbon blacks by the SFE treatment. The TPD-MS analysis was conducted as follows: About 50 mg of the respective carbon black sample to be analyzed was weighed in an aluminum oxide crucible and then transferred into a thermogravimetric instrument (STA 409 PC LUXX, Erich NETZSCH GmbH & Co. Holding KG, Selb, Germany). The sample was then subjected under a constant flow of 30 NmL helium gas per minute to a predetermined temperature program (heating at a rate of 5 K·min$^{-1}$ until a temperature of 80°C was reached, holding for 30 min at 80°C, heating at a rate of 5 K·min$^{-1}$ until a temperature of 1,000°C was reached, holding for 30 min at 1,000°C, cooling at a rate of 20 K·min$^{-1}$ until room temperature was reached). The effluent flow of gas from the sample comprising *inter alia* $CO_2$ and CO desorbed from the sample was analyzed by an MS instrument (GSD 301 O2 Omnistar, Pfeiffer Vacuum GmbH, Asslar, Germany). The detected MS signals indicative of $CO_2$ and CO were baseline-corrected and the amount of $CO_2$ and CO per gram carbon black determined by signal integration and based on a calibration.

Supercritical fluid extractions were carried out following the above-mentioned procedure applying the conditions as set forth in the following examples:

Examples 1-4:

According to Examples 1-4, carbon black of the Carbon Black A type was used. About 10 g of the carbon black was each loaded to the extraction chamber of the supercritical fluid extraction setup as described above. The sample was dried at a temperature of 150°C and a pressure of 10 bar under $CO_2$ atmosphere for 90 minutes under a gentle flow of carbon dioxide gas. Subsequently, the dried sample was subjected to continuous supercritical fluid extraction using carbon dioxide as extraction agent at a pressure of 200 bar, a temperature of 150°C and an estimated average flow rate of the extraction agent through the extraction chamber corresponding to 55 NL/h (average flow rate per unit volume of the extraction chamber: 684 NL·h$^{-1}$·L$^{-1}$) for a time that varied from 2 h in case of Example 1, over 4 h in case of Example 2, or 20 h in case of Example 3, to 36 h in case of Example 4.

The PAH22 content of the thus obtained extracted Carbon Black A samples according to Examples 1-4 was each determined as described above. The results are summarized in Table 2 below in comparison to the initial PAH22 content determined for the pristine carbon black A that has not been subjected to SFE as a reference. The reported relative extracted amount has been calculated according to the formula *1-(x(example)/x(reference)),* wherein *x(example)* and *x(reference)* represent the detected amount of the indicated PAH compound or detected total amount of the indicated group of PAH compounds for the extracted carbon black of the respective Example and the pristine reference carbon black, respectively.

*Table 2*

| CAS No. | Compound name | Reference 1 | Example 1 | | Example 2 | | Example 3 | | Example 4 | |
|---|---|---|---|---|---|---|---|---|---|---|
| | Carbon Black type: | A | A | | A | | A | | A | |
| | SFE treatment: | none | 150°C, 200 bar, **2** h | | 150°C, 200 bar, **4** h | | 150°C, 200 bar, **20** h | | 150°C, 200 bar, **36** h | |
| | | ppm (mg/kg) | ppm (mg/kg) | rel. extracted amount | ppm (mg/kg) | rel. extracted amount | ppm (mg/kg) | rel. extracted amount | ppm (mg/kg) | rel. extracted amount |
| 91-20-3 | Naphthalene | 215 | 87.5 | 0.593 | 46.3 | 0.784 | 15.6 | 0.927 | 24.1 | 0.888 |
| 208-96-8 | Acenaphthylene | 325 | 19.7 | 0.939 | 16.5 | 0.949 | 2.59 | 0.992 | 4.95 | 0.985 |
| 83-32-9 | Acenaphthene | <1 | <1 | - | <1 | - | <1 | - | <1 | - |
| 86-73-7 | Fluorene | 6.47 | <0.5 | >0.923 | <0.5 | >0.923 | <0,5 | >0.923 | <0,5 | >0.923 |
| 85-01-8 | Phenanthrene | 841 | 629 | 0.253 | 596 | 0.292 | 227 | 0.73 | 175 | 0.792 |
| 120-12-7 | Anthracene | 137 | 56.6 | 0.586 | 56.1 | 0.590 | 23.7 | 0.827 | 26.3 | 0.807 |
| 206-44-0 | Fluoranthene | 212 | 196 | 0.075 | 193 | 0.090 | 139 | 0.343 | 129 | 0.391 |
| 129-00-0 | Pyrene | 146 | 136 | 0.070 | 134 | 0.085 | 105 | 0.281 | 99.8 | 0.319 |
| 203-12-3 | Benzo(q,h,i)fluoranthene | 35.5 | 33.7 | 0.051 | 33.9 | 0.046 | 30.1 | 0.153 | 29.5 | 0.171 |
| 56-55-3 | Benz(a)anthracene | 13.7 | 9.90 | 0.279 | 9.98 | 0.273 | 5.42 | 0.605 | 5.31 | 0.613 |
| 27208-37-3 | Cyclopenta(c,d)pyrene | 25.1 | 2.50 | 0.900 | 3.22 | 0.871 | <0.5 | >0.980 | 0.664 | 0.974 |
| 218-01-9 | Chrysene | 13.7 | 11.1 | 0.192 | 10.8 | 0.211 | 6.49 | 0.526 | 6.34 | 0.537 |
| 205-99-2 | Benzo(b)fluoranthene | 27.4 | 25.3 | 0.078 | 26.0 | 0.053 | 18.8 | 0.314 | 21.3 | 0.223 |
| 207-08-9 | Benzo(k)fluoranthene | 21.4 | 19.2 | 0.105 | 19.1 | 0.108 | 14.4 | 0.33 | 15.6 | 0.274 |
| 192-97-2 | Benzo(e)pyrene | 11.8 | 11.8 | -0.001 | 11.7 | 0.005 | 11.2 | 0.05 | 11.2 | 0.044 |
| 50-32-8 | Benzo(a)pyrene | 18.5 | 16.7 | 0.098 | 16.6 | 0.103 | 13.3 | 0.281 | 13.8 | 0.257 |
| 198-55-0 | Perylene | 7.69 | 7.11 | 0.076 | 7.17 | 0.068 | 6.09 | 0.209 | 6.46 | 0.161 |
| 53-70-3 | Dibenz(a,h)anthracene | 3.78 | 3.51 | 0.072 | 3.58 | 0.052 | 2.91 | 0.231 | 3.03 | 0.197 |
| 191-24-2 | Benzo(g,h,i)perylene | 18.9 | 18.5 | 0.021 | 18.0 | 0.046 | 17.3 | 0.082 | 18.3 | 0.031 |
| 193-39-5 | Indeno(1,2,3-cd)pyrene | 30.5 | 28.5 | 0.067 | 27.7 | 0.093 | 25.2 | 0.175 | 25.9 | 0.15 |
| 191-26-4 | Anthanthrene | 6.95 | 5.49 | 0.210 | 5.58 | 0.198 | 4.53 | 0.349 | 5.04 | 0.275 |

(continued)

| CAS No. | Compound name | Reference 1 | Example 1 | | Example 2 | | Example 3 | | Example 4 | |
|---|---|---|---|---|---|---|---|---|---|---|
| | **Carbon Black type:** | A | A | | A | | A | | A | |
| | **SFE treatment:** | none | 150°C, 200 bar, **2** h | | 150°C, 200 bar, **4** h | | 150°C, 200 bar, **20** h | | 150°C, 200 bar, **36** h | |
| | | ppm (mg/kg) | ppm (mg/kg) | rel. extracted amount | ppm (mg/kg) | rel. extracted amount | ppm (mg/kg) | rel. extracted amount | ppm (mg/kg) | rel. extracted amount |
| 191-07-1 | Coronene | 6.12 | 5.40 | 0.118 | 5.52 | 0.098 | 4.93 | 0.194 | 5.65 | 0.077 |
| | **PAH22 class:** | **2125** | **1325** | **0.377** | **1242** | **0.416** | **676** | **0.682** | **628** | **0.704** |

The results of Table 2 show that purified carbon blacks with a significantly reduced content of polycyclic aromatic hydrocarbons compared to the starting material (reference 1) can be obtained through the supercritical fluid extraction with carbon dioxide as extraction agent. Thus, the Carbon Black A subjected to supercritical fluid extraction in Examples 1-4 had an initial PAH22 content of more than 2,000 ppm (cf. reference 1). The PAH22 content was reduced to less than 65% of the initial content by the supercritical fluid extraction under the conditions of Examples 1-4 for a treatment time as short as 2 hours (cf. Example 1). Longer treatment times allowed to continuously further reduce the PAH22 content, such as for example to less than 30% of the initial content in case Example 4 corresponding to an extraction efficiency of about 70%.

Additionally, samples were taken from the absorbing medium of acetonitrile after every 4 hours of the supercritical fluid extraction process according to Example 4, whereby fresh acetonitrile was filled in the absorption chamber at the beginning of every 4-hour interval. These samples were analyzed by measuring the UV/Vis absorption using a spectrometer (Spectro 320 from Instrument Systems Optische Messtechnik GmbH), with light from a DH-2000 light source from Ocean Optics Inc. equipped with a deep UV deuterium bulb (190-400 nm) and a halogen bulb (360-2500 nm), and Thorlabs solar-resistant multimode fiber for light guidance and a Thorlabs cuvette CV10Q3500. Pure acetonitrile was used as a reference sample for normalization. The absorption at a wavelength of 250 nm was chosen as a measure for the overall PAH concentration in the absorbing medium. The absorption at a wavelength of 250 nm was selected due to relatively weak absorption of the acetonitrile and strong absorption of the aromatic system of PAHs at this wavelength. Based on Lambert-Beer's law, $\varepsilon \cdot n \cdot l$ as a measure of the total amount of extracted PAH species was calculated for every sample according to

$$log\left(\frac{I_{reference}}{I_{sample}}\right) \cdot V_0 \cdot (1+K) = \epsilon \cdot n \cdot l$$

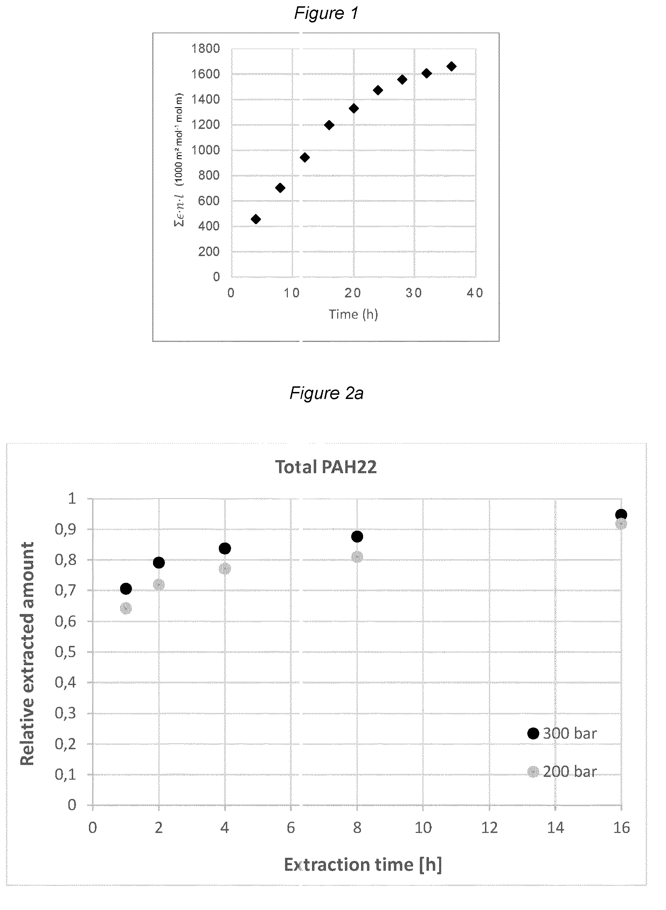

with $I_{reference}$ and $I_{sample}$ as the intensity measured at the wavelength of 250 nm for the SFE sample and the reference sample, respectively, $V_0$ as the volume of the sample and $K$ as a dilution factor with K corresponding to the parts by volume of added acetonitrile solvent (as highly concentrated samples had to be diluted prior to spectroscopic measurement); for example K being 3 for a dilution by adding 3 parts by volume of solvent to 1 part by volume of sample. $\varepsilon$ represents the extinction coefficient (in L/(mol*cm)), n the amount of PAH substances (in mol) and l the pathlength of the light through the sample in the cuvette (in cm). $\Sigma\varepsilon \cdot n \cdot l$ was calculated by summing up the thus obtained values of $\varepsilon \cdot n \cdot l$ and plotted versus the elapsed extraction time in Fig. 1. As can be seen in Fig. 1, $\Sigma\varepsilon \cdot n \cdot l$ increases continuously with progressing extraction time indicative of the progressing purification of the carbon black. This shows that a monitoring of the PAH extraction process is possible based on the effluent gas stream from the extraction chamber. Moreover, it can be seen from Fig. 1 that $\Sigma\varepsilon \cdot n \cdot l$ increases initially more pronounced than at later stages of the extraction process. Without wishing to be bound to any theory, this could be due to polycyclic aromatic hydrocarbons residing at the particle surface being more easily removed than PAHs residing within the carbon black particles as the latter are less exposed to the extraction agent and have a longer pathway to the particle surface.

Examples 4b & 4c

According to Examples 4b and 4c, likewise Carbon Black type A was used. About 10 g of the carbon black was for each extraction run within Example 4b or 4c loaded to the extraction chamber of the supercritical fluid extraction setup as described above. No dedicated drying step was carried out. The samples were subjected to continuous supercritical fluid extraction using carbon dioxide as extraction agent at a pressure of 200 bar (in case of Example 4b) or at a pressure of 300 bar (in case of Example 4c) and a temperature of 250°C and an estimated average flow rate of the extraction agent through the extraction chamber corresponding to 74 NL/h (average flow rate per unit volume of the extraction chamber: 921 $NL \cdot h^{-1} \cdot L^{-1}$) for a time of i) 1h, ii) 2 h, iii) 4h, iv) 8h or v) 16h, respectively.

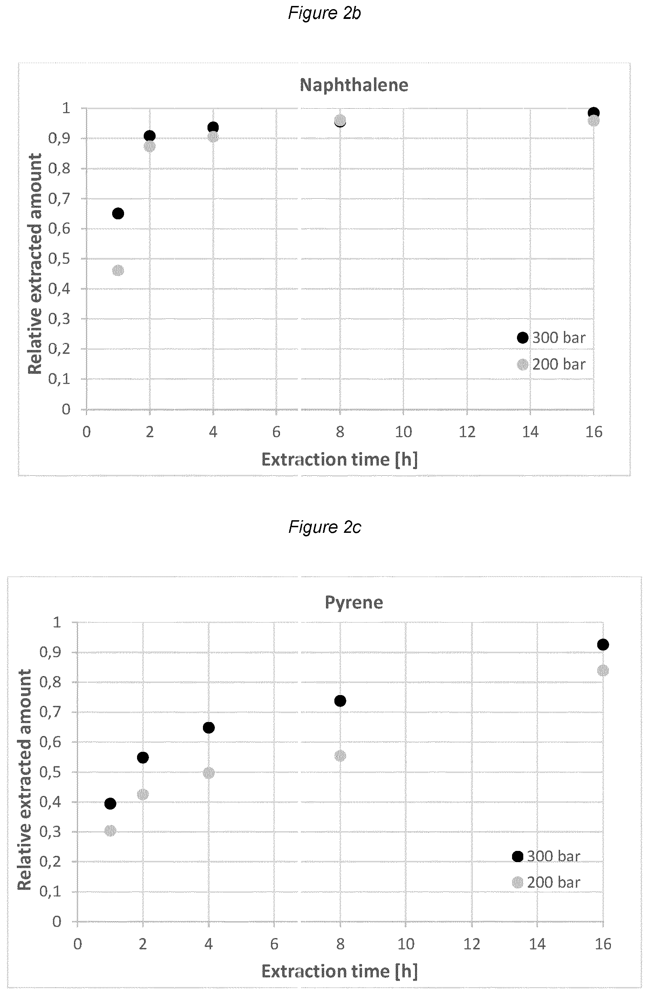

The PAH22 content of the thus obtained extracted samples treated for the above-mentioned five different periods of time i)-v) according to Examples 4b and 4c were each determined as described above. The results are illustrated for the total PAH22 group in Fig. 2a and selected PAH substances thereof in Figs. 2b (naphthalene) and 2c (pyrene) in terms of the extracted amount relative to the initial content of the respective PAH substance(s) determined for the pristine type A carbon black that has not been subjected to SFE as a reference. As can be seen from Fig. 2a, the overall PAH22 extraction efficiency increases continuously with progressing extraction time indicative of the progressing purification of the carbon black, being somewhat higher at 300 bar than at 200 bar. As can be seen from Figs. 2b and 2c, certain PAH compounds like naphthalene are more easily removed from the carbon black than others such as pyrene.

Examples 5 to 7:

According to Examples 5 to 7, carbon black of the type A was again used as carbon black to be subjected to supercritical fluid extraction. About 10 g of the carbon black was each loaded to the extraction chamber of the supercritical fluid extraction setup as described above. No dedicated drying step was carried out. The samples were subjected to continuous supercritical fluid extraction using carbon dioxide as extraction agent at a pressure of 300 bar and an average flow rate of the extraction agent corresponding to about 74 NL $CO_2$/h (average flow rate per unit volume of the extraction chamber: 921 $NL \cdot h^{-1} \cdot L^{-1}$) at a temperature of 75°C (in case of Example 5) or 150°C (in case of Example 6) or 250°C (in case of Example 7) for a time of 16 h each.

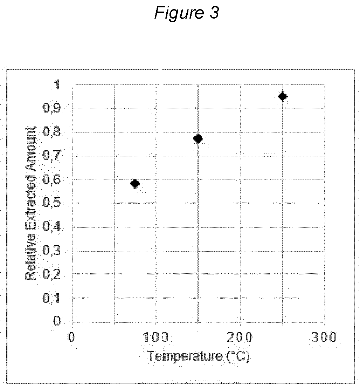

The PAH22 content of the thus obtained extracted type A samples according to Examples 5-7 was each determined as described above. The results are summarized in Table 3 below in comparison to the initial PAH22 content determined for the pristine type A carbon black that has not been subjected to SFE as a reference (cf. reference 1). The reported relative extracted amount has been calculated according to the formula *1-(x(example)/x(reference))*, wherein *x(example)* and *x(reference)* represent the detected amount of the indicated PAH compound or detected total amount of the indicated group of PAH compounds for the extracted carbon black of the respective Example and the pristine reference carbon black, respectively. Fig. 3 illustrates the attained relative extracted amount for the total group of PAH22 compounds as a function of the applied extraction temperature.

The results summarized in Table 3 and illustrated in Fig. 3 show that the PAH22 content of the carbon black can be significantly reduced by more than 50% of the initial PAH22 content through supercritical fluid extraction utilizing supercritical carbon dioxide as extraction agent at a temperature as low as 75°C (Example 5). The extraction efficiency increases notably with increasing applied temperature to more than 90% of the initial PAH22 content at a temperature of 250°C (Example 7). This demonstrates that increasing the extraction temperature may considerably increase the extraction efficiency.

*Table 3*

| | | Reference 1 | Example 5 | | Example 6 | | Example 7 | |
|---|---|---|---|---|---|---|---|---|
| Carbon Black type: | | A | A | | A | | A | |
| SFE treatment: | | none | **75°C,** 300 bar, 16 h | | **150°C,** 300 bar, 16 h | | **250°C,** 300 bar, 16 h | |
| | | ppm (mg/kg) | ppm (mg/kg) | rel. extracted amount | ppm (mg/kg) | rel. extracted amount | ppm (mg/kg) | rel. extracted amount |
| CAS No. | Compound name | | | | | | | |
| 91-20-3 | Naphthalene | 215 | 46 | 0.786 | 14.3 | 0.934 | <1.5 | >0.993 |
| 208-96-8 | Acenaphthylene | 325 | 31 | 0.905 | 3.04 | 0.991 | <0.5 | >0.998 |
| 83-32-9 | Acenaphthene | <1 | <0.5 | - | <0.2 | - | <0.5 | |
| 86-73-7 | Fluorene | 6.47 | 1.57 | 0.758 | <0.2 | >0.969 | <0.5 | >0.923 |
| 85-01-8 | Phenanthrene | 841 | 227 | 0.730 | 96 | 0.886 | 16.4 | 0.980 |
| 120-12-7 | Anthracene | 137 | 73.6 | 0.462 | 27.4 | 0.800 | 2.36 | 0.983 |
| 206-44-0 | Fluoranthene | 212 | 158 | 0.253 | 96.7 | 0.543 | 12.3 | 0.942 |
| 129-00-0 | Pyrene | 146 | 108 | 0.263 | 72 | 0.509 | 10.9 | 0.926 |
| 203-12-3 | Benzo(g,h,i)fluoranthene | 35.5 | 37.5 | 0.000 | 32.7 | 0.080 | 10.1 | 0.715 |
| 56-55-3 | Benz(a)anthracene | 13.7 | 12.6 | 0.082 | 6.89 | 0.498 | 0.694 | 0.949 |
| 27208-37-3 | Cyclopenta(c,d)pyrene | 25.1 | 17.1 | 0.318 | 0.563 | 0.978 | <0.5 | >0.980 |
| 218-01-9 | Chrvsene | 13.7 | 12.4 | 0.094 | 8.2 | 0.401 | 0.907 | 0.934 |
| 205-99-2 | Benzo(b)fluoranthene | 27.4 | 30.1 | 0.000 | 23 | 0.162 | 7.02 | 0.744 |
| 207-08-9 | Benzo(k)fluoranthene | 21.4 | 21.5 | -0.003 | 15.9 | 0.259 | 4.04 | 0.812 |
| 192-97-2 | Benzo(e)pyrene | 11.8 | 12.7 | 0.000 | 11.1 | 0.056 | 6.63 | 0.436 |

(continued)

| | | Reference 1 | Example 5 | | Example 6 | | Example 7 | |
|---|---|---|---|---|---|---|---|---|
| Carbon Black type: | | A | A | | A | | A | |
| SFE treatment: | | none | **75°C,** 300 bar, 16 h | | **150°C,** 300 bar, 16 h | | **250°C,** 300 bar, 16 h | |
| | | ppm (mg/kg) | ppm (mg/kg) | rel. extracted amount | ppm (mg/kg) | rel. extracted amount | ppm (mg/kg) | rel. extracted amount |
| CAS No. | Compound name | | | | | | | |
| 50-32-8 | Benzo(a)pyrene | 18.5 | 19 | 0.000 | 13.9 | 0.249 | 2.81 | 0.848 |
| 198-55-0 | Perylene | 7.69 | 7.84 | 0.000 | 6.26 | 0.186 | 2.18 | 0.717 |
| 53-70-3 | Dibenz(a,h)anthracene | 3.78 | 3.97 | 0.000 | 3.36 | 0.111 | 1.48 | 0.610 |
| 191-24-2 | Benzo(ghi)perylene | 18.9 | 20.7 | 0.000 | 19.9 | 0.000 | 13.7 | 0.274 |
| 193-39-5 | Indeno(1,2,3-cd)pyrene | 30.5 | 31.3 | 0.000 | 27.3 | 0.106 | 12.7 | 0.583 |
| 191-26-4 | Anthanthrene | 6.95 | 6.83 | 0.018 | 5.34 | 0.232 | <0.5 | >0.928 |
| 191-07-1 | Coronene | 6.12 | 7.79 | 0.000 | 6.55 | 0.000 | 4.15 | 0.322 |
| | **PAH22 class:** | **2125** | **887** | **0.583** | **491** | **0.769** | **112** | **0.950** |

Table 4 summarizes the results of the TPD-MS analysis of the purified carbon black A samples of Examples 3, 5, and 7 in comparison to a pristine carbon black A sample not subjected to SFE (Reference 1) and a carbon black A sample, which was not treated with SFE, but instead was subjected to a heat treatment at 150°C for 6 h under argon atmosphere (Comparative Example 1) or to a heat treatment at 500°C for 6 h under argon atmosphere (Comparative Example 2). The results of Table 4 show that the $CO_2$ and CO concentrations determined by the TPD-MS analysis for the samples treated with supercritical fluid extraction are comparable to the $CO_2$ and CO concentrations determined for the pristine sample and Comparative Example 1. This indicates that no major changes to the surface chemistry of the carbon black have been caused by the SFE treatment. By contrast, Comparative Example 2 illustrates that a heat treatment at higher temperature (500°C), as has been proposed in the art to remove PAHs from carbon blacks, yields a CO concentration that deviates significantly from the pristine sample, indicative of changes to the surface chemistry of the carbon black caused by the heat treatment.

*Table 4*

| | Reference 1 | Example 5 | Example 3 | Example 7 | Comparative Example 1 | Comparative Example 2 |
|---|---|---|---|---|---|---|
| Carbon Black type: | A | A | A | A | A | A |
| SFE treatment: | none | SFE (75°C, 300 bar, 16h) | SFE (150°C, 200 bar, 20 h) | SFE (250°C, 300 bar, 16 h) | Heat Treatment (150 °C, 6h, Ar) | Heat Treatment (500 °C, 6h, Ar) |
| c [mmol(gas)/g(CB)] | | | | | | |
| $CO_2$ | 0.183 | 0.306 | 0.256 | 0.236 | 0.214 | 0.158 |
| CO | 1.166 | 1.268 | 1.275 | 1.252 | 1.215 | 0.426 |

Example 8 and 9:

According to Examples 8 and 9, carbon black of the B type was used as carbon black to be subjected to supercritical fluid extraction. About 10 g of the carbon black was each loaded to the extraction chamber of the supercritical fluid extraction setup as described above. The sample was dried at a temperature of 150°C and a pressure of 10 bar under $CO_2$ atmosphere for 90 minutes under a gentle flow of carbon dioxide. Subsequently, the dried sample was subjected to continuous supercritical fluid extraction using carbon dioxide as extraction agent at a pressure of 200 bar, a temperature of 150°C, and an average flow rate corresponding to 100 NL $CO_2$/h (average flow rate per unit volume of the extraction chamber: 1245 NL·h$^{-1}$·L$^{-1}$) for a time of approximately 9 h in case of Example 8, or at a pressure of 300 bar, a temperature of 250°C, and an average flow rate corresponding to 74 NL $CO_2$/h (average flow rate per unit volume of the extraction chamber: 921 NL·h$^{-1}$·L$^{-1}$) for a time of 16 h in case of Example 9.

The PAH content in terms of PAH22 content as well as the nitro-PAH8 content of the thus obtained extracted type B samples according to Examples 8 and 9 was each determined as described above. The results are summarized in Tables 5 and 6 below in comparison to the initial PAH22 content and initial nitro-PAH8 determined for the pristine type B carbon black that has not been subjected to SFE as a reference. The reported relative extracted amount has been calculated according to the formula $1-(x(example)/x(reference))$, wherein $x(example)$ and $x(reference)$ represent the detected amount of the indicated PAH compound or detected total amount of the indicated group of PAH compounds for the extracted carbon black of the respective Example and the pristine reference carbon black, respectively.

*Table 5*

| | | **Reference 2** | **Example 8** | | **Example 9** | |
|---|---|---|---|---|---|---|
| Carbon Black type: | | B | B | | B | |
| SFE treatment: | | none | **150°C, 200 bar,** 9 h | | **250°C, 300 bar,** 16 h | |
| | | ppm (mg/kg) | ppm (mg/kg) | rel. extracted amount | ppm (mg/kg) | rel. extracted amount |
| CAS No. | Compound name | | | | | |
| 91-20-3 | Naphthalene | 3.29 | 3.59 | -0.089 | 0.44 | 0.866 |
| 208-96-8 | Acenaphthylene | 0.102 | <0.1 | >0.0196 | <0.01 | >0.0196 |
| 83-32-9 | Acenaphthene | <0.1 | <0.1 | - | <0.01 | - |
| 86-73-7 | Fluorene | <0.1 | <0.1 | - | <0.01 | - |
| 85-01-8 | Phenanthrene | 6.07 | 6.65 | -0.095 | 2.96 | 0.513 |
| 120-12-7 | Anthracene | 0.649 | 0.219 | 0.663 | 0.14 | 0.787 |
| 206-44-0 | Fluoranthene | 1.35 | 1.32 | 0.023 | 0.68 | 0.498 |
| 129-00-0 | Pyrene | 0.184 | 0.216 | -0.171 | 0.13 | 0.284 |
| 203-12-3 | Benzo(g,h,i)fluoranthene | 0.532 | 0.296 | 0.444 | 0.10 | 0.808 |
| 56-55-3 | Benz(a)anthracene | <0.1 | 0.117 | - | 0.04 | <0.597 |
| 27208-37-3 | Cyclopenta(c,d)pyrene | <0.1 | <0.1 | - | <0.01 | - |
| 218-01-9 | Chrvsene | 0.173 | 0.213 | -0.228 | 0.09 | 0.478 |
| 205-99-2 | Benzo(b)fluoranthene | 1.19 | 0.579 | 0.515 | 0.22 | 0.814 |
| 207-08-9 | Benzo(k)fluoranthene | 0.183 | 0.135 | 0.263 | 0.06 | 0.663 |
| 192-97-2 | Benzo(e)pyrene | <0.1 | <0.1 | - | 0.03 | <0.696 |
| 50-32-8 | Benzo(a)pyrene | <0.1 | <0.1 | - | <0.01 | - |
| 198-55-0 | Perylene | <0.1 | <0.1 | - | <0.01 | - |
| 53-70-3 | Dibenz(a,h)anthracene | <0.1 | <0.1 | - | 0.01 | <0.892 |
| 191-24-2 | Benzo(ghi)perylene | <0.1 | <0.1 | - | 0.01 | <0.873 |
| 193-39-5 | Indeno(1,2,3-cd)pyrene | 0.159 | 0.111 | 0.304 | 0.03 | 0.802 |
| 191-26-4 | Anthanthrene | <0.1 | <0.1 | - | <0.01 | - |
| 191-07-1 | Coronene | <0.2 | <0.2 | - | <0.02 | - |

(continued)

|  |  | Reference 2 | Example 8 | | Example 9 | |
|---|---|---|---|---|---|---|
| Carbon Black type: | | B | B | | B | |
| SFE treatment: | | none | **150°C, 200 bar,** 9 h | | **250°C, 300 bar,** 16 h | |
| | | ppm (mg/kg) | ppm (mg/kg) | rel. extracted amount | ppm (mg/kg) | rel. extracted amount |
| CAS No. | Compound name | | | | | |
| | **PAH22 class:** | **15.1** | **14.6** | **0.030** | **5.03** | **0.67** |

*Table 6*

|  |  | Reference 2 | Example 8 | | Example 9 | |
|---|---|---|---|---|---|---|
| Carbon Black type: | | B | B | | B | |
| SFE treatment: | | none | **150°C**, **200 bar,** 9 h | | **250°C, 300 bar,** 16 h | |
| | | ppm (mg/kg) | ppm (mg(kg) | rel. extracted amount | ppm (mg/kg) | rel. extracted amount |
| CAS No. | Compound name | | | | | |
| 86-57-7 | 1-Nitronaphthalene | 20.08 | 3.88 | 0.807 | <0.02 | >0.999 |
| 581-89-5 | 2-Nitronaphthalene | 3.29 | 1.82 | 0.448 | <0.02 | >0.994 |
| 954-46-1 | 9-Nitrophenanthrene | 52.0 | 10.3 | 0.802 | <0.02 | >0.999 |
| 892-21-7 | 3-Nitrofluoranthene | 11.62 | 2.56 | 0.780 | <0.02 | >0.998 |
| 5522-43-0 | 1-Nitropyrene | 4.58 | 2.18 | 0.524 | <0.02 | >0.996 |
| 75321-20-9 | 1,3-Dinitropyrene | 1.02 | <0.2 | >0.804 | <0.04 | >0.961 |
| 42397-64-8 | 1,6-Dinitropyrene | 9.37 | 0.388 | 0.959 | <0.04 | >0.996 |
| 92-93-3 | 4-Nitrobiphenyl | 2.60 | 1.21 | 0.536 | <0.02 | >0.992 |
| | **nitro-PAH8 class:** | **105.0** | **22.5** | **0.784** | **<0.2** | **>0.998** |

*Table 7*

|  | Reference 2 | Example 8 | Comparative Example 2 |
|---|---|---|---|
| Carbon Black type: | B | B | B |
| SFE treatment: | none | SFE: 150°C, 200 bar, 9 h | 150 °C, 6h, Ar |
| c [mmol(gas)/g(CB)] | | | |
| $CO_2$ | 0.963 | 0.941 | 0.858 |
| CO | 2.949 | 2.882 | 2.771 |

The results in Table 6 demonstrate that supercritical fluid extraction with carbon dioxide as extraction agent enables also an effective purification of carbon blacks from nitro-PAH compounds, which can in particular be important for carbon blacks that have a notable initial content of nitro-PAHs as may for example be the case for oxidized carbon blacks. Example 8 shows that already at moderate SFE conditions, such as 150°C and 200 bar, a purified carbon black can be obtained whose nitro-PAH8 content is significantly reduced by about 80% based on the initial content, the purified carbon black having a nitro-PAH8 content of less than 30 ppm. Example 9 illustrates that applying more stringent SFE conditions allows to further reduce the nitro-PAH content even below the limit of quantification of the individual species, up to a substantially complete purification from nitro-PAH8 compounds, achieving an extraction efficiency of more than 99%. As shown in Table 5 also a purification of the carbon black from unsubstituted PAH compounds is achieved, particularly for Example 9, wherein the PAH22 content was reduced from initially about 15 ppm to about 5 ppm, corresponding to an extraction efficiency of more than 60%.

Table 7 furthermore shows the results of the TPD-MS analysis for the purified carbon black B sample of Example 8 in comparison to a pristine carbon black B sample not subjected to SFE (Reference 2) and a carbon black B sample, which was not treated with SFE, but instead was subjected to a heat treatment at 150°C for 6 h under argon atmosphere (Comparative Example 1). The results of Table 7 show that the $CO_2$ and CO concentrations determined by the TPD-MS analysis of the sample treated with supercritical fluid extraction are very close to the values determined for the pristine carbon black B and the heat-treated sample, respectively. This provides an indication that the SFE treatment basically preserves the properties of the initial carbon black apart from the desired removal of PAHs.

Example 10:

According to Example 10, carbon black of the type C was used as carbon black to be subjected to supercritical fluid extraction. About 10 g of the carbon black was loaded to the extraction chamber of the supercritical fluid extraction setup as described above. The sample was subjected to continuous supercritical fluid extraction using carbon dioxide as extraction agent at a pressure of 300 bar, a temperature of 250°C, and an average flow rate corresponding to 74 NL $CO_2$/h (average flow rate per unit volume of the extraction chamber: 921 $NL \cdot h^{-1} \cdot L^{-1}$) for a time of 16 h. The PAH22 content of the thus obtained extracted carbon black C sample was determined as described above. The results are summarized in Table 8 below in comparison to the initial PAH22 content determined for the pristine carbon black C sample that has not been subjected to SFE as a reference (Reference 3).

*Table 8*

| | | Reference 3 | Example 10 | |
|---|---|---|---|---|
| | Carbon Black type: | C | C | |
| | SFE treatment: | none | 250°C, 300 bar, 16 h | |
| | | ppm (mg/kg) | ppm (mg/kg) | rel. extracted amount |
| CAS No. | Compound name | | | |
| 91-20-3 | Naphthalene | 1.40 | 0.0347 | 0.975 |
| 208-96-8 | Acenaphthylene | 1.710 | 0.0196 | 0.989 |
| 83-32-9 | Acenaphthene | 0.045 | <0.01 | >0.778 |
| 86-73-7 | Fluorene | 0.029 | <0.01 | >0.655 |
| 85-01-8 | Phenanthrene | 1.39 | 0.795 | 0.428 |
| 120-12-7 | Anthracene | 0.084 | 0.0392 | 0.532 |
| 206-44-0 | Fluoranthene | 1.42 | 1.04 | 0.268 |
| 129-00-0 | Pyrene | 9.470 | 6.98 | 0.263 |
| 203-12-3 | Benzo(ghi)fluoranthene | 0.842 | 0.626 | 0.257 |
| 56-55-3 | Benz(a)anthracene | 0.010 | <0.01 | - |
| 27208-37-3 | Cyclopenta(cd)pyrene | 1.520 | 0.0346 | 0.977 |
| 218-01-9 | Chrysene | 0.016 | 0.0135 | 0.129 |
| 205-99-2 | Benzo(b)fluoranthene | 0.03 | 0.0293 | 0.073 |
| 207-08-9 | Benzo(k)fluoranthene | 0.010 | <0.01 | - |
| 192-97-2 | Benzo(e)pyrene | 0.410 | 0.354 | 0.137 |
| 50-32-8 | Benzo(a)pyrene | 0.427 | 0.278 | 0.349 |
| 198-55-0 | Perylene | 0.033 | 0.0248 | 0.255 |
| 53-70-3 | Dibenz(a,h)anthracene | <0.01 | <0.01 | - |
| 191-24-2 | Benzo(ghi)perylene | 2.600 | 2.03 | 0.219 |
| 193-39-5 | Indeno(1,2,3-cd)pyrene | 0.231 | 0.178 | 0.229 |
| 191-26-4 | Anthanthrene | 0.222 | 0.0398 | 0.821 |

(continued)

| | | Reference 3 | Example 10 | |
|---|---|---|---|---|
| Carbon Black type: | | C | C | |
| SFE treatment: | | none | 250°C, 300 bar, 16 h | |
| | | ppm (mg/kg) | ppm (mg/kg) | rel. extracted amount |
| CAS No. | Compound name | | | |
| 191-07-1 | Coronene | 0.875 | 0.673 | 0.231 |
| | PAH22 class: | 22.8 | 13.2 | 0.421 |

The results in Table 8 demonstrate that supercritical fluid extraction with carbon dioxide as extraction agent enables also a purification of furnace blacks having a relatively low initial PAH content.

Example 11:

According to Example 11, carbon black of the type D was used as carbon black to be subjected to supercritical fluid extraction. About 5 g of the carbon black was loaded to the extraction chamber of the supercritical fluid extraction setup as described above. The sample was subjected to continuous supercritical fluid extraction using carbon dioxide as extraction agent at a pressure of 300 bar, a temperature of 350°C, and an average flow rate corresponding to 74 NL $CO_2$/h (average flow rate per unit volume of the extraction chamber: 921 $NL \cdot h^{-1} \cdot L^{-1}$) for a time of 4 h. The PAH22 content of the thus obtained extracted carbon black D sample was determined as described above. The results are summarized in Table 9 below in comparison to the initial PAH22 content determined for the pristine carbon black D sample that has not been subjected to SFE as a reference (Reference 4).

Table 9

| | | Reference 4 | Example 11 | |
|---|---|---|---|---|
| Carbon Black type: | | D | D | |
| SFE treatment: | | none | 350°C, 300 bar, 4 h | |
| | | ppm (mg/kg) | ppm (mg/kg) | rel. extracted amount |
| CAS No. | Compound name | | | |
| 91-20-3 | Naphthalene | 6.09 | 0.0749 | 0.988 |
| 208-96-8 | Acenaphthylene | 6.92 | 0.0145 | 0.997 |
| 83-32-9 | Acenaphthene | 0.13 | <0.01 | >0.923 |
| 86-73-7 | Fluorene | 0.09 | 0.0110 | 0.871 |
| 85-01-8 | Phenanthrene | 6.67 | 0.161 | 0.976 |
| 120-12-7 | Anthracene | 0.51 | 0.0129 | 0.974 |
| 206-44-0 | Fluoranthene | 15.20 | 0.107 | 0.993 |
| 129-00-0 | Pyrene | 114.00 | 0.863 | 0.992 |
| 203-12-3 | Benzo(ghi)fluoranthene | 8.47 | 1.74 | 0.795 |
| 56-55-3 | Benz(a)anthracene | 0.05 | 0.0121 | 0.770 |
| 27208-37-3 | Cyclopenta(cd)pyrene | 45.70 | 0.0110 | 0.999 |
| 218-01-9 | Chrysene | 0.10 | 0.0295 | 0.716 |
| 205-99-2 | Benzo(b)fluoranthene | 0.30 | 0.153 | 0.483 |
| 207-08-9 | Benzo(k)fluoranthene | 0.09 | 0.0341 | 0.616 |
| 192-97-2 | Benzo(e)pyrene | 2.45 | 1.50 | 0.388 |
| 50-32-8 | Benzo(a)pyrene | 2.62 | 0.963 | 0.632 |

(continued)

|  |  | Reference 4 | Example 11 | |
|---|---|---|---|---|
| Carbon Black type: | | D | D | |
| SFE treatment: | | none | 350°C, 300 bar, 4 h | |
|  |  | ppm (mg/kg) | ppm (mg/kg) | rel. extracted amount |
| CAS No. | Compound name | | | |
| 198-55-0 | Perylene | 0.25 | 0.0927 | 0.626 |
| 53-70-3 | Dibenz(a,h)anthracene | <0.05 | <0.01 | >0.80 |
| 191-24-2 | Benzo(ghi)perylene | 22.00 | 15.4 | 0.3 |
| 193-39-5 | Indeno(1,2,3-cd)pyrene | 2.85 | 1.66 | 0.418 |
| 191-26-4 | Anthanthrene | 6.63 | 0.743 | 0.888 |
| 191-07-1 | Coronene | 16.50 | 12.6 | 0.236 |
| | **PAH22 class:** | **258.0** | **36.1** | **0.860** |

The results in Table 9 demonstrate that supercritical fluid extraction with carbon dioxide as extraction agent enables also a purification of furnace blacks having a relatively high initial PAH content, achieving an extraction efficiency of more than 85%.

**Claims**

1. A process for producing a purified carbon black with a reduced content of polycyclic aromatic hydrocarbons, the process comprising:

   (a) providing a carbon black comprising an initial content of polycyclic aromatic hydrocarbons,
   (b) treating the carbon black comprising an initial content of polycyclic aromatic hydrocarbons with an extraction agent comprising carbon dioxide in a supercritical state to extract at least a portion of the polycyclic aromatic hydrocarbons from the carbon black, wherein treating the carbon black with the extraction agent is conducted at a temperature of 75°C or more, and
   (c) removing the extraction agent comprising the extracted polycyclic aromatic hydrocarbons from the carbon black to obtain a purified carbon black with a lower content of polycyclic aromatic hydrocarbons than the initial content of polycyclic aromatic hydrocarbons.

2. The process according to claim 1, wherein the carbon black comprising an initial content of polycyclic aromatic hydrocarbons comprises a furnace black, a thermal black, a lamp black, a gas black, an acetylene black, a recycled black or a combination of any of the foregoing and/or comprises an oxidized carbon black, and/or wherein the carbon black comprising an initial content of polycyclic aromatic hydrocarbons exhibits one or more or all of:

   - an ash content determined according to ASTM D1506-15 of 20 wt.% or less, such as 15 wt.% or less, 10 wt.% or less, 5 wt.% or less, 3 wt.% or less, 1 wt.% or less, or 0.5 wt.% or less, or 0.1 wt.% or less,
   - a volatile content determined by heating to 950°C according to DIN 53552:1977 of 20 wt.% or less, such as 15 wt.% or less, such as 10 wt.% or less,
   - a moisture content determined according to ASTM D1509-18 of 15 wt.% or less, such as 10 wt.% or less, 5 wt.% or less, 3 wt.% or less, or 1 wt.% or less, and/or
   - a carbon content as determined by elemental analysis of 80 wt.% or more, such as 85 wt.% or more, such as 90 wt.% or more, such as 95 wt.% or more, such as 97 wt.% or more, such as 98 wt.% or more.

3. The process according to any one of the preceding claims, wherein the content of polycyclic aromatic hydrocarbons is determined as the PAH22 content, the nitro-PAH8 content or the sum of the PAH22 content and the nitro-PAH8 content, wherein the carbon black comprising an initial content of polycyclic aromatic hydrocarbons may for example have

- an initial PAH22 content of 10 ppm or more, such as 50 ppm or more, 100 ppm or more, 500 ppm or more, 800 ppm or more, or 1,000 ppm or more; and/or
- an initial nitro-PAH8 content of 1 ppm or more such as 10 ppm or more, 50 ppm or more, 100 ppm or more, or 500 ppm or more.

4.  The process according to any one of the preceding claims, wherein the extraction agent comprises at least 50 wt.% carbon dioxide, such as at least 70 wt.% carbon dioxide, such as at least 80 wt.% carbon dioxide, or at least 90 wt.% carbon dioxide, or at least 95 wt.% carbon dioxide, or at least 99 wt.% carbon dioxide, based on the total weight of the extraction agent.

5.  The process according to any one of claims 1 to 4, wherein the extraction agent further comprises one or more auxiliary agents or wherein the extraction agent consists of supercritical carbon dioxide.

6.  The process according to any one of claims 1 to 5, wherein treating the carbon black with the extraction agent in step (b) is conducted at a temperature in a range from 75°C to 400°C, preferably from 100°C to 350°C, such as from 100°C to 300°C, and/or at a pressure of $7.5 \cdot 10^6$ Pa (75 bar) or more, such as a pressure in a range from $7.5 \cdot 10^6$ Pa (75 bar) to $7 \cdot 10^7$ Pa (700 bar), preferably from $10^7$ Pa (100 bar) to $5 \cdot 10^7$ Pa (500 bar), such as from $1.5 \cdot 10^7$ Pa (150 bar) to $3 \cdot 10^7$ Pa (300 bar) and/or wherein treating the carbon black with the extraction agent in step (b) is conducted for a time of at least 1 minute, such as a time of at least 1 hour and/or of up to 48 hours.

7.  The process according to any one of claims 1 to 6, wherein treating the carbon black with the extraction agent in step (b) comprises exposing the carbon black to a flow of the extraction agent, wherein the average flow rate of the extraction agent per mass unit of the amount of treated carbon black (in kg) corresponds preferably to 1,000 $NL \cdot h^{-1} \cdot kg^{-1}$ or more, such as 5,000 $NL \cdot h^{-1} \cdot kg^{-1}$ or more, for example from 5,000 $NL \cdot h^{-1} \cdot kg^{-1}$ to 100,000 $NL \cdot h^{-1} \cdot kg^{-1}$.

8.  The process according to any one of the preceding claims 3-7, wherein treating the carbon black with the extraction agent in step (b) comprises

    - extracting at least 40 wt. %, such as at least 70 wt. %, such as at least 80 wt. %, or at least 90 wt. % or at least 95 wt. % of the initial PAH22 content from the carbon black; and/or
    - extracting at least 50 wt. %, such as at least 70 wt. %, such as at least 80 wt.%, or at least 90 wt.% or at least 95 wt. % of the initial nitro-PAH8 content from the carbon black.

9.  The process according to any one of the claims 3-8, wherein the purified carbon black obtained in step (c) has a content of polycyclic aromatic hydrocarbons, which corresponds to

    - 60 wt. % or less, such as 30 wt. % or less, such as 20 wt. % or less, such as 10 wt. % or less, such as 5 wt. % or less of the initial PAH22 content; and/or
    - 50 wt. % or less, such as 30 wt. % or less, such as 20 wt. % or less, such as 10 wt.% or less, such as 5 wt.% or less of the initial nitro-PAH8 content.

10.  The process according to any one of the preceding claims, further comprising one or more or all of the following:

    - drying the carbon black comprising an initial content of polycyclic aromatic hydrocarbons prior to treating it with the extraction agent;
    - separating at least a portion of the polycyclic aromatic hydrocarbons from the extraction agent comprising the extracted polycyclic aromatic hydrocarbons removed from the carbon black in step (c), such as by reducing the pressure, and optionally recycling the thus obtained extraction agent for use in step (b),
    - detecting the amount of polycyclic aromatic hydrocarbons extracted by the extraction agent, such as by an online measurement, wherein preferably the treatment of the carbon black with the extraction agent in step (b) is controlled based on the detected amount of extracted polycyclic aromatic hydrocarbons.

11.  The process according to any one of the preceding claims, wherein the process is conducted as a continuous process, as a semi-batch or as a batch process and/or wherein the process is carried out in a pressure-resistant reactor with heating means.

12.  The process according to any one of preceding claims 1 to 11, wherein the purified carbon black has a nitro-PAH8 content of less than 200 ppm, such as less than 100 ppm, or less than 50 ppm, or less than 25 ppm, or less than 10 ppm, or less than 5 ppm, or less than 1 ppm.

13. The process according to any one of preceding claims 1 to 12, wherein the purified carbon black has a PAH22 content of less than 1,500 ppm, such as less than 1,000 ppm, or less than 700 ppm, or less than 500 ppm, or less than 200 ppm, less than 150 ppm, or less than 100 ppm or less than 50 ppm, or less than 20 ppm, or less than 10 ppm.

14. Use of supercritical carbon dioxide for a purification of carbon black, particularly for removing polycyclic aromatic hydrocarbons from carbon black, wherein the carbon black is purified with the supercritical carbon dioxide at a temperature of 75°C or more.

**Patentansprüche**

1. Ein Verfahren zum Herstellen eines gereinigten Rußes mit einem reduzierten Gehalt an polyzyklischen aromatischen Kohlenwasserstoffen, das Verfahren umfassend:

   (a) Bereitstellen eines Rußes umfassend einen Ausgangsgehalt an polyzyklischen aromatischen Kohlenwasserstoffen,
   (b) Behandeln des Rußes umfassend einen Ausgangsgehalt an polyzyklischen aromatischen Kohlenwasserstoffen mit einem Extraktionsmittel umfassend Kohlendioxid in einem überkritischen Zustand, um wenigstens einen Teil der polyzyklischen aromatischen Kohlenwasserstoffe von dem Ruß zu extrahieren, wobei das Behandeln des Rußes mit dem Extraktionsmittel bei einer Temperatur von 75°C oder mehr durchgeführt wird, und
   (c) Entfernen des Extraktionsmittels umfassend die extrahierten polyzyklischen aromatischen Kohlenwasserstoffe von dem Ruß, um einen gereinigten Ruß mit einem niedrigeren Gehalt an polyzyklischen aromatischen Kohlenwasserstoffen als dem Ausgangsgehalt an polyzyklischen aromatischen Kohlenwasserstoffen zu erhalten.

2. Das Verfahren gemäß Anspruch 1, wobei der Ruß umfassend einen Ausgangsgehalt an polyzyklischen aromatischen Kohlenwasserstoffen einen Ofenruß, einen thermischen Ruß, einen Lampenruß, einen Gasruß, einen Acetylenruß, einen recycelten Ruß oder eine Kombination von irgendwelchen der Vorstehenden umfasst und/oder einen oxidierten Ruß umfasst, und/oder wobei der Ruß umfassend einen Ausgangsgehalt an polyzyklischen aromatischen Kohlenwasserstoffen ein oder mehrere oder alle der folgenden Merkmale aufweist:

   - einen Aschegehalt, bestimmt gemäß ASTM D1506-15, von 20 Gew.-% oder weniger, wie etwa 15 Gew.-% oder weniger, 10 Gew.-% oder weniger, 5 Gew.-% oder weniger, 3 Gew.-% oder weniger, 1 Gew.-% oder weniger, oder 0,5 Gew.-% oder weniger, oder 0,1 Gew.-% oder weniger,
   - einen flüchtigen Gehalt, bestimmt durch Erhitzen auf 950°C gemäß **DIN** 53552:1977, von 20 Gew.-% oder weniger, wie etwa 15 Gew.-% oder weniger, wie etwa 10 Gew.-% oder weniger,
   - einen Feuchtegehalt, bestimmt gemäß ASTM D1509-18, von 15 Gew.-% oder weniger, wie etwa 10 Gew.-% oder weniger, 5 Gew.-% oder weniger, 3 Gew.-% oder weniger, oder 1 Gew.-% oder weniger, und/oder
   - einen Kohlenstoffgehalt, bestimmt durch Elementaranalyse, von 80 Gew.-% oder mehr, wie etwa 85 Gew.-% oder mehr, wie etwa 90 Gew.-% oder mehr, wie etwa 95 Gew.-% oder mehr, wie etwa 97 Gew.-% oder mehr, wie etwa 98 Gew.-% oder mehr.

3. Das Verfahren gemäß irgendeinem der vorstehenden Ansprüche, wobei der Gehalt an polyzyklischen aromatischen Kohlenwasserstoffen bestimmt wird als der PAH22-Gehalt, der nitro-PAH8-Gehalt oder die Summe des PAH22-Gehalts und des nitro-PAH8-Gehalts, wobei der Ruß umfassend einen Ausgangsgehalt an polyzyklischen aromatischen Kohlenwasserstoffen zum Beispiel

   - einen Ausgangs-PAH22-Gehalt von 10 ppm oder mehr, wie etwa 50 ppm oder mehr, 100 ppm oder mehr, 500 ppm oder mehr, 800 ppm oder mehr, oder 1000 ppm oder mehr, und/oder
   - einen Ausgangs-nitro-PAH8-Gehalt von 1 ppm oder mehr, wie etwa 10 ppm oder mehr, 50 ppm oder mehr, 100 ppm oder mehr, oder 500 ppm oder mehr,

   aufweisen kann.

4. Das Verfahren gemäß irgendeinem der vorstehenden Ansprüche, wobei das Extraktionsmittel wenigstens 50 Gew.-

% Kohlendioxid umfasst, wie etwa wenigstens 70 Gew.-% Kohlendioxid, wie etwa wenigstens 80 Gew.- % Kohlendioxid, oder wenigstens 90 Gew.-% Kohlendioxid, oder wenigstens 95 Gew.-% Kohlendioxid, oder wenigstens 99 Gew.-% Kohlendioxid, basierend auf dem Gesamtgewicht des Extraktionsmittels.

5. Das Verfahren gemäß irgendeinem der Ansprüche 1 bis 4, wobei das Extraktionsmittel des Weiteren ein oder mehrere Hilfsmittel umfasst oder wobei das Extraktionsmittel aus überkritischem Kohlendioxid besteht.

6. Das Verfahren gemäß irgendeinem der Ansprüche 1 bis 5, wobei das Behandeln des Rußes mit dem Extraktionsmittel in Schritt (b) bei einer Temperatur in einem Bereich von 75°C bis 400°C, vorzugsweise von 100°C bis 350°C, wie etwa von 100°C bis 300°C, und/oder bei einem Druck von $7{,}5 \cdot 10^6$ Pa (75 bar) oder mehr, wie etwa einem Druck in einem Bereich von $7{,}5 \cdot 10^6$ Pa (75 bar ) bis $7 \cdot 10^7$ Pa (700 bar), vorzugsweise von $10^7$ Pa (100 bar) bis $5 \cdot 10^7$ Pa (500 bar), wie etwa von $1{,}5 \cdot 10^7$ Pa (150 bar) bis $3 \cdot 10^7$ Pa (300 bar) durchgeführt wird und/oder wobei das Behandeln des Rußes mit dem Extraktionsmittel in Schritt (b) für eine Zeitdauer von wenigstens 1 Minute, wie etwa für eine Zeitdauer von wenigstens 1 Stunde und/oder von bis zu 48 Stunden durchgeführt wird.

7. Das Verfahren gemäß irgendeinem der Ansprüche 1 bis 6, wobei das Behandeln des Rußes mit dem Extraktionsmittel in Schritt (b) ein Aussetzen des Rußes gegenüber einem Fluss des Extraktionsmittels umfasst, wobei die durchschnittliche Flussrate des Extraktionsmittels pro Masseneinheit der Menge an behandeltem Ruß (in kg) vorzugsweise $1.000\ \mathrm{NL \cdot h^{-1} \cdot kg^{-1}}$ oder mehr entspricht, wie etwa $5.000\ \mathrm{NL \cdot h^{-1} \cdot kg^{-1}}$ oder mehr, zum Beispiel von $5.000\ \mathrm{NL \cdot h^{-1} \cdot kg^{-1}}$ bis $100.000\ \mathrm{NL \cdot h^{-1} \cdot kg^{-1}}$.

8. Das Verfahren gemäß irgendeinem der vorstehenden Ansprüche 3 bis 7, wobei das Behandeln des Rußes mit dem Extraktionsmittel in Schritt (b) umfasst:

- Extrahieren von wenigstens 40 Gew.-%, wie etwa wenigstens 70 Gew.-%, wie etwa wenigstens 80 Gew.-%, oder wenigstens 90 Gew.-%, oder wenigstens 95 Gew.-% des Ausgangs-PAH22-Gehalts von dem Ruß, und/oder
- Extrahieren von wenigstens 50 Gew.-%, wie etwa wenigstens 70 Gew.-%, wie etwa wenigstens 80 Gew.-%, oder wenigstens 90 Gew.-%, oder wenigstens 95 Gew.-% des Ausgangs-nitro-PAH8-Gehalts von dem Ruß.

9. Das Verfahren gemäß irgendeinem der Ansprüche 3 bis 8, wobei der gereinigte Ruß, der in Schritt (c) erhalten wird, einen Gehalt an polyzyklischen aromatischen Kohlenwasserstoffen aufweist, welcher:

- 60 Gew.-% oder weniger, wie etwa 30 Gew.-% oder weniger, wie etwa 20 Gew.-% oder weniger, wie etwa 10 Gew.-% oder weniger, wie etwa 5 Gew.-% oder weniger des Ausgangs-PAH22-Gehalts, und/oder
- 50 Gew.-% oder weniger, wie etwa 30 Gew.-% oder weniger, wie etwa 20 Gew.-% oder weniger, wie etwa 10 Gew.-% oder weniger, wie etwa 5 Gew.-% oder weniger des Ausgangs-nitro-PAH8-Gehalts

entspricht.

10. Das Verfahren gemäß irgendeinem der vorstehenden Ansprüche, des Weiteren umfassend einen oder mehrere oder alle der folgenden Schritte:

- Trocknen des Rußes umfassend einen Ausgangsgehalt an polyzyklischen aromatischen Kohlenwasserstoffen bevor dieser mit dem Extraktionsmittel behandelt wird,
- Trennen von wenigstens einem Teil der polyzyklischen aromatischen Kohlenwasserstoffe von dem Extraktionsmittel umfassend die extrahierten polyzyklischen aromatischen Kohlenwasserstoffe, welches von dem Ruß in Schritt (c) entfernt wurde, wie etwa durch Reduzieren des Drucks, und wahlweise Recyceln des so erhaltenen Extraktionsmittels zur Verwendung in Schritt (b),
- Detektieren der Menge an polyzyklischen aromatischen Kohlenwasserstoffen, die durch das Extraktionsmittel extrahiert wurden, wie etwa durch eine Online-Messung, wobei vorzugsweise das Behandeln des Rußes mit dem Extraktionsmittel in Schritt (b) basierend auf der detektierten Menge an extrahierten polyzyklischen aromatischen Kohlenwasserstoffen geregelt wird.

11. Das Verfahren gemäß irgendeinem der vorstehenden Ansprüche, wobei das Verfahren als ein kontinuierlicher Prozess, ein Semi-Batch-Verfahren oder als ein Batch-Verfahren durchgeführt wird und/oder wobei das Verfahren in einem druckfesten Reaktor mit Heizmitteln ausgeführt wird.

**12.** Das Verfahren gemäß irgendeinem der vorstehenden Ansprüche 1 bis 11, wobei der gereinigte Ruß einen nitro-PAH8-Gehalt von weniger als 200 ppm, wie etwa weniger als 100 ppm, oder weniger als 50 ppm, oder weniger als 25 ppm, oder weniger als 10 ppm, oder weniger als 5 ppm, oder weniger als 1 ppm aufweist.

**13.** Das Verfahren gemäß irgendeinem der vorstehenden Ansprüche 1 bis 12, wobei der gereinigte Ruß einen PAH22-Gehalt von weniger als 1.500 ppm, wie etwa weniger als 1.000 ppm, oder weniger als 700 ppm, oder weniger als 500 ppm, oder weniger als 200 ppm, weniger als 150 ppm, oder weniger als 100 ppm, oder weniger als 50 ppm, oder weniger als 20 ppm, oder weniger als 10 ppm aufweist.

**14.** Verwendung von überkritischem Kohlendioxid für eine Reinigung von Ruß, insbesondere zum Entfernen polyzyklischer aromatischer Kohlenwasserstoffe von Ruß, wobei der Ruß mit dem überkritischen Kohlendioxid bei einer Temperatur von 75°C oder mehr gereinigt wird.

**Revendications**

**1.** Procédé de production d'un noir de carbone purifié à teneur réduite en hydrocarbures aromatiques polycycliques, lequel procédé comporte :

a) prendre un noir de carbone présentant une teneur initiale en hydrocarbures aromatiques polycycliques,
b) traiter ce noir de carbone, qui présente une teneur initiale en hydrocarbures aromatiques polycycliques, avec un agent d'extraction comprenant du dioxyde de carbone à l'état de fluide supercritique, pour extraire du noir de carbone au moins une partie des hydrocarbures aromatiques polycycliques, étant entendu que ce traitement du noir de carbone avec l'agent d'extraction est effectué à une température de 75 °C ou plus,
c) et séparer du noir de carbone l'agent d'extraction contenant les hydrocarbures aromatiques polycycliques extraits, pour obtenir un noir de carbone purifié dont la teneur en hydrocarbures aromatiques polycycliques est plus basse que la teneur initiale en hydrocarbures aromatiques polycycliques.

**2.** Procédé conforme à la revendication 1, dans lequel le noir de carbone présentant une teneur initiale en hydrocarbures aromatiques polycycliques comprend un noir de four, un noir thermique, un noir de lampe, un noir de gaz, un noir d'acétylène, un noir recyclé ou une combinaison de n'importe lesquels des précédents et/ou comprend un noir de carbone oxydé, et/ou dans lequel le noir de carbone présentant une teneur initiale en hydrocarbures aromatiques polycycliques présente l'une ou plusieurs des caractéristiques suivantes ou toutes celles-ci :

- une teneur en cendres, déterminée selon la norme ASTM D1506-15, de 20 % en poids ou moins, comme 15 % en poids ou moins, 10 % en poids ou moins, 5 % en poids ou moins, 3 % en poids ou moins, 1 % en poids ou moins, ou 0,5 % en poids ou moins, ou 0,1 % en poids ou moins,
- une teneur en composés volatils, déterminée par chauffage à 950 °C selon la norme DIN 53552:1977, de 20 % en poids ou moins, comme 15 % en poids ou moins, ou comme 10 % en poids ou moins,
- une teneur en humidité, déterminée selon la norme ASTM D1509-18, de 15 % en poids ou moins, comme 10 % en poids ou moins, 5 % en poids ou moins, 3 % en poids ou moins, ou 1 % en poids ou moins,
- et/ou une teneur en carbone, déterminée par analyse élémentaire, de 80 % en poids ou plus, comme 90 % en poids ou plus, 95 % en poids ou plus, 97 % en poids ou plus, ou 98 % en poids ou plus.

**3.** Procédé conforme à l'une des revendications précédentes, dans lequel la teneur en hydrocarbures aromatiques polycycliques est déterminée comme étant la teneur en HAP22, la teneur en nitro-HAP8, ou la somme de la teneur en HAP22 et de la teneur en nitro-HAP8, étant entendu que le noir de carbone présentant une teneur initiale en hydrocarbures aromatiques polycycliques peut par exemple présenter

- une teneur initiale en HAP22 de 10 ppm ou plus, comme 50 ppm ou plus, 100 ppm ou plus, 500 ppm ou plus, 800 ppm ou plus, ou 1000 ppm ou plus,
- et/ou une teneur initiale en nitro-HAP8 de 1 ppm ou plus, comme 10 ppm ou plus, 50 ppm ou plus, 100 ppm ou plus, ou 500 ppm ou plus.

**4.** Procédé conforme à l'une des revendications précédentes, dans lequel l'agent d'extraction comprend au moins 50 % en poids de dioxyde de carbone, comme au moins 70 % en poids de dioxyde de carbone, au moins 80 % en poids de dioxyde de carbone, ou au moins 90 % en poids de dioxyde de carbone, ou au moins 95 % en poids de dioxyde de carbone, ou au moins 99 % en poids de dioxyde de carbone, par rapport au poids total de l'agent d'extraction.

5. Procédé conforme à l'une des revendication 1 à 4, dans lequel l'agent d'extraction comprend en outre un ou plusieurs agent(s) auxiliaire(s), ou dans lequel l'agent d'extraction consiste en du dioxyde de carbone supercritique.

6. Procédé conforme à l'une des revendications 1 à 5, dans lequel, dans l'étape (b), le traitement du noir de carbone avec l'agent d'extraction est effectué à une température située dans l'intervalle allant de 75 °C à 400 °C, et de préférence de 100 °C à 350 °C, comme de 100 °C à 300 °C, et/ou sous une pression de $7,5.10^6$ Pa (75 bars) ou plus, comme une pression située dans l'intervalle allant de $7,5.10^6$ Pa (75 bars) à $7.10^7$ Pa (700 bars), et de préférence, de $10^7$ Pa (100 bars) à $5.10^7$ Pa (500 bars), comme de $1,5.10^7$ Pa (150 bars) à $3.10^7$ Pa (300 bars), et/ou dans lequel, dans l'étape (b), le traitement du noir de carbone avec l'agent d'extraction est mené durant un laps de temps d'au moins 1 minute, comme un laps de temps d'au moins 1 heure et/ou de jusqu'à 48 heures.

7. Procédé conforme à l'une des revendications 1 à 6, dans lequel, dans l'étape (b), le traitement du noir de carbone avec l'agent d'extraction comporte le fait d'exposer le noir de carbone à un courant de l'agent d'extraction, étant entendu que le débit moyen du courant d'agent d'extraction par unité de masse de la quantité de noir de carbone traité (exprimée en kilogrammes) correspond de préférence à 1000 $NL.h^{-1}.kg^{-1}$ ou plus, comme 5000 $NL.h^{-1}.kg^{-1}$ ou plus, par exemple de 5000 $NL.h^{-1}.kg^{-1}$ à 100 000 $NL.h^{-1}.kg^{-1}$.

8. Procédé conforme à l'une des revendications 3 à 7 précédentes, dans lequel, dans l'étape (b), le traitement du noir de carbone avec l'agent d'extraction comporte

   - le fait d'extraire du noir de carbone au moins 40 % en poids, comme au moins 70 % en poids, au moins 80 % en poids, ou au moins 90 % en poids, ou au moins 95 % en poids, de sa teneur initiale en HAP22,
   - et/ou le fait d'extraire du noir de carbone au moins 50 % en poids, comme au moins 70 % en poids, au moins 80 % en poids, ou au moins 90 % en poids, ou au moins 95 % en poids, de sa teneur initiale en nitro-HAP8.

9. Procédé conforme à l'une des revendications 3 à 8, dans lequel le noir de carbone purifié obtenu dans l'étape (c) présente une teneur en hydrocarbures aromatiques polycycliques qui correspond

   - à 60 % en poids ou moins, comme 30 % en poids ou moins, 20 % en poids ou moins, 10 % en poids ou moins, ou 5 % en poids ou moins, de la teneur initiale en HAP22,
   - et/ou à 50 % en poids ou moins, comme 30 % en poids ou moins, 20 % en poids ou moins, 10 % en poids ou moins, ou 5 % en poids ou moins, de la teneur initiale en nitro-HAP8.

10. Procédé conforme à l'une des revendications précédentes, qui comporte en outre l'une ou plusieurs des opérations suivantes ou toutes ce opérations :

    - faire sécher le noir de carbone présentant une teneur initiale en hydrocarbures aromatiques polycycliques, avant de le traiter avec l'agent d'extraction,
    - séparer au moins une partie des hydrocarbures aromatiques polycycliques d'avec l'agent d'extraction contenant des hydrocarbures aromatiques polycycliques extraits, séparé d'avec le noir de carbone dans l'étape (c), par exemple en réduisant la pression, et en option, recycler l'agent d'extraction ainsi obtenu pour l'utiliser dans l'étape (b),
    - détecter la quantité d'hydrocarbures aromatiques polycycliques extraits par l'agent d'extraction, par exemple par mesure en ligne, étant entendu que de préférence, le traitement du noir de carbone avec l'agent d'extraction effectué dans l'étape (b) est régulé sur la base de la quantité détectée d'hydrocarbures aromatiques polycycliques extraits.

11. Procédé conforme à l'une des revendications précédentes, lequel procédé est réalisé en mode continu, semi-continu ou discontinu, et/ou lequel procédé est mis en œuvre dans un réacteur résistant à la pression et muni de moyens de chauffage.

12. Procédé conforme à l'une des revendications précédentes 1 à 11, dans lequel le noir de carbone purifié présente une teneur en nitro-HAP8 valant moins de 200 ppm, comme moins de 100 ppm, ou moins de 50 ppm, ou moins de 25 ppm, ou moins de 10 ppm, ou moins de 5 ppm, ou moins de 1 ppm.

13. Procédé conforme à l'une des revendications précédentes 1 à 12, dans lequel le noir de carbone purifié présente une teneur en HAP22 valant moins de 1500 ppm, comme moins de 1000 ppm, ou moins de 700 ppm, ou moins de 500 ppm, ou moins de 200 ppm, ou moins de 150 ppm, ou moins de 100 ppm, ou moins de 50 ppm, ou moins de 20 ppm, ou moins de 10 ppm.

**14.** Utilisation de dioxyde de carbone à l'état supercritique pour purifier du noir de carbone, en particulier pour séparer des hydrocarbures aromatiques polycycliques d'un noir de carbone, dans laquelle le noir de carbone est purifié avec du dioxyde de carbone à l'état supercritique à une température de 75 °C ou plus.

## Figure 1

## Figure 2a

Figure 2b

Naphthalene

Figure 2c

Pyrene

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4138471 A
- WO 2019084200 A1
- WO 2008058114 A2
- US 20080159947 A1

**Non-patent literature cited in the description**

- **SUDIP K. SAMANTA ; OM V. SINGH ; RAKESH K. JAIN**. Polycyclic aromatic hydrocarbons: environmental pollution and bioremediation. *TRENDS in Biotechnology*, June 2002, vol. 20 (6), 243-248
- **PETER P. FU ; DIOGENES HERRENO-SAENZ**. Nitro-polycyclic aromatic hydrocarbons: A class of genotoxic environmental pollutants. *Journal of Environmental Science and Health, Part C: Environmental Carcinogenesis and Ecotoxicology Reviews*, 1999, vol. 17 (6), 1-43
- **S. B. HAWTHORNE et al.** Comparing PAH availability from manufactured gas plant soils and sediments with chemical and biological tests. 1. PAH release during water desorption and supercritical carbon dioxide extraction. *Environ. Sci. Technol.*, 2002, vol. 36, 4795-4803
- **M. T. O. JONKER et al.** Extremely slowly desorbing polycyclic aromatic hydrocarbons from soot and soot-like materials: Evidence by supercritical fluid extraction. *Environ. Sci. Technol.*, 2005, vol. 39, 7889-7895
- *CHEMICAL ABSTRACTS*, 91-20-3
- *CHEMICAL ABSTRACTS*, 208-96-8
- *CHEMICAL ABSTRACTS*, 83-32-9
- *CHEMICAL ABSTRACTS*, 86-73-7
- *CHEMICAL ABSTRACTS*, 85-01-8
- *CHEMICAL ABSTRACTS*, 120-12-7
- *CHEMICAL ABSTRACTS*, 206-44-0
- *CHEMICAL ABSTRACTS*, 129-00-0
- *CHEMICAL ABSTRACTS*, 203-12-3
- *CHEMICAL ABSTRACTS*, 56-55-3
- *CHEMICAL ABSTRACTS*, 27208-37-3
- *CHEMICAL ABSTRACTS*, 218-01-9
- *CHEMICAL ABSTRACTS*, 205-99-2
- *CHEMICAL ABSTRACTS*, 207-08-9
- *CHEMICAL ABSTRACTS*, 192-97-2
- *CHEMICAL ABSTRACTS*, 50-32-8
- *CHEMICAL ABSTRACTS*, 198-55-0
- *CHEMICAL ABSTRACTS*, 53-70-3
- *CHEMICAL ABSTRACTS*, 191-24-2
- *CHEMICAL ABSTRACTS*, 193-39-5
- *CHEMICAL ABSTRACTS*, 191-26-4
- *CHEMICAL ABSTRACTS*, 191-07-1
- *Determination of PAH content of Carbon Black*, 08 July 1994
- *CHEMICAL ABSTRACTS*, 86-57-7
- *CHEMICAL ABSTRACTS*, 581-89-5
- *CHEMICAL ABSTRACTS*, 954-46-1
- *CHEMICAL ABSTRACTS*, 892-21-7
- *CHEMICAL ABSTRACTS*, 5522-43-0
- *CHEMICAL ABSTRACTS*, 75321-20-9
- *CHEMICAL ABSTRACTS*, 42397-64-8
- *CHEMICAL ABSTRACTS*, 92-93-3
- **J.-B. DONNET et al.** Carbon Black: Science and Technology